# EUROPEAN PATENT APPLICATION

(11) **EP 4 818 933 A1**
(43) Date of publication of application: **07.10.2026**
(21) Application number: 24910626.1
(22) Date of filing: 06.12.2024
(51) Int. Cl.: G06F 18/214, G06F 18/15, G06F 123/02

(54) **METHOD FOR PROCESSING DATA AND APPARATUS THEREOF**

(30) Priority: 29.12.2023 CN 202311868156
(71) Applicant: Huawei Technologies Co., Ltd., Shenzhen, Guangdong 518129 (CN)
(72) Inventor: ZHAO, Xuan, Shenzhen, Guangdong 518129 (CN); WANG, Xianchao, Shenzhen, Guangdong 518129 (CN); LIANG, Xuewan, Shenzhen, Guangdong 518129 (CN); LIANG, Yunpei, Chongqing 400044 (CN)
(74) Representative: MERH-IP Matias Erny Reichl Hoffmann Patentanwälte PartG mbB
(86) International application number: PCT/CN2024/137279
(87) International publication number: WO 2025/139694

(57) **Abstract**

A data processing method is disclosed. The method includes: obtaining first data; sending, to a device side, a first model obtained through training based on the first data, where the first model is a base model for time series prediction; obtaining second data, where the second data and the first data are data of different categories; and sending, to the device side, a second model obtained through training based on the second data, where the second model is used to predict data related to a prediction bias of the base model.

## Description

This application claims priority to Chinese Patent Application No. 202311868156.7, filed with the China National Intellectual Property Administration on December 29, 2023 and entitled "DATA PROCESSING METHOD AND APPARATUS", which is incorporated herein by reference in its entirety.

### TECHNICAL FIELD

This application relates to the artificial intelligence field, and in particular, to a data processing method and apparatus.

### BACKGROUND

A time series data prediction task is a future-data prediction task performed based on historical time series data. For more accurate prediction, input data is usually a plurality of categories of data related to to-be-predicted data. For example, during gas concentration prediction in the coal mining field, data like a gas concentration, a wind speed, wind pressure, carbon monoxide, temperature, a coal cutting speed, a gas drainage amount, or gas pumping pressure is used as an input to predict a future gas concentration.

An existing prediction task is usually completed only by using a single algorithm model. In this manner, a quantity of dimensions of an input feature of the model is fixed. To be specific, a quantity of categories of input data is fixed during model training and inference. When input data is missing, there is no input in a corresponding dimension, leading to an algorithm failure or low prediction accuracy.

### SUMMARY

According to a first aspect, this application provides a data processing method. The method includes: obtaining first data; sending, to a device side, a first model obtained through training based on the first data, where the first model is a base model for time series prediction; obtaining second data, where the second data and the first data are data of different categories; and sending, to the device side, a second model obtained through training based on the second data, where the second model is used to predict data related to a prediction bias of the base model.

An idea of this application is to divide input data into layers, where each layer of data may include one or more categories of time series data, a corresponding model may be trained for each layer of data, and a final prediction result is obtained by fusing prediction results of a plurality of models. In this way, even if data at some layers is missing, prediction can still be performed by using data that is not missing and a corresponding model, to ensure prediction effect. In addition, because data of a large quantity of categories is not used as an input for a same model, even if data of some categories is missing, an algorithm model can still be feasible and effective. In addition, because a value of data related to a prediction bias is quite small relative to a to-be-predicted data subject, when input data of a corresponding category for a model used for predicting bias-related data is missing, impact on final predicted data is quite small. Therefore, during model training or inference, because input data for a model used for predicting the to-be-predicted data subject is less likely to be missing, the model used for the to-be-predicted data subject is used, to improve prediction accuracy.

In a possible implementation, the second model is used to perform residual prediction on the base model.

In a possible implementation, the first data and the second data include time series data within a same time period. For example, the first data and the second data are time series data within a same time period, or the first data and the second data are time series data within time periods that partially overlap.

In a possible implementation, the first data and the second data include data collected in a same scenario within a first time period, and the first data further includes data collected at a target moment after the first time period. Before sending, to the device side, the second model obtained through training based on the second data, the method further includes: obtaining, by using the first model, predicted data for the target moment based on data, in the first data, that is collected within the first time period; and using, as a first ground-truth, a residual between the predicted data and the data, in the first data, that is collected at the target moment, and performing training based on data, in the second data, that is collected within the first time period, to obtain the second model.

In a possible implementation, a ground-truth used during training of a model corresponding to one or more layers of data may be set to to-be-predicted data (for ease of description, the model may be referred to as a model used for predicting a to-be-predicted data subject, that is, the base model), and a ground-truth used during training of a model corresponding to data at another layer is set to a predicted residual of the model. The predicted residual may be understood as a prediction result for a difference between a prediction result of the model and a real result.

In a possible implementation, the method further includes: obtaining third data, where the third data, the second data, and the first data are time series data of different categories that is collected in a same scenario; and sending, to the device side, a third model obtained through training based on the third data, where the third model is used to predict data related to a prediction bias of the second model.

In a possible implementation, the third model is used to predict a predicted residual of a predicted residual of the second model.

In a possible implementation, the first data, the second data, and the third data include data collected in a same scenario within the first time period, and the first data further includes data collected at the target moment after the first time period. Before sending, to the device side, the third model obtained through training based on the third data, the method further includes: obtaining, by using the second model, a predicted residual for the first model based on data, in the second data, that is collected within the first time period; and using a residual between the predicted residual and the first ground-truth as a second ground-truth, and performing training based on data, in the third data, that is collected within the first time period, to obtain the third model.

In a possible implementation, the first data is sensor data of a first category, and the second data is sensor data of a second category. A possibility of data missing during collection of the sensor data of the first category is lower than a possibility of data missing during collection of the sensor data of the second category. Alternatively, the first model is used to predict sensor data of a third category based on the sensor data of the first category, where a correlation between the sensor data of the first category and the sensor data of the third category is higher than a correlation between the sensor data of the second category and the sensor data of the third category. The first category and the third category are the same or different.

In a possible implementation, the method further includes: receiving indication information sent by the device side, where the indication information indicates that the first data is used as a training sample for the base model for time series prediction.

In a possible implementation, the first data and the second data are sensor data related to a hazardous substance in a resource collection scenario.

According to a second aspect, this application provides a data processing method. The method includes:
sending first data;
receiving a first model, where the first model is obtained through training based on the first data, and the first model is a base model for time series prediction;
sending second data, where the second data and the first data are data of different categories; and
receiving a second model, where the second model is obtained through training based on the second data, and the second model is used to predict data related to a prediction bias of the base model.

In a possible implementation, the second model is used to perform residual prediction on the base model.

In a possible implementation, the first data and the second data include time series data within a same time period.

In a possible implementation, the method further includes:
sending third data, where the third data, the second data, and the first data are time series data of different categories that is collected in a same scenario; and
receiving a third model, where the third model is obtained through training based on the third data, and the third model is used to predict data related to a prediction bias of the second model.

In a possible implementation, the third model is used to predict a predicted residual of a predicted residual of the second model.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the method further includes:
sending indication information, where the indication information indicates that the first data is used as a training sample for the base model for time series prediction.

In a possible implementation, the first data and the second data are sensor data related to a hazardous substance in a resource collection scenario.

According to a third aspect, this application provides a data processing method. The method includes:
obtaining first data and second data, where the first data and the second data are data of different categories that is collected in a same scenario within a first time period; and
obtaining target data based on the first data and the second data, where the target data is a fusion result of first predicted data and second predicted data, the first predicted data is obtained by predicting, based on the first data, data for a target moment after the first time period, and the second predicted data is data that is determined based on the second data and that is related to a prediction bias of the first predicted data.

In a possible implementation, the second predicted data is a predicted residual, determined based on the second data, of the first predicted data.

In a possible implementation, the first data and the second data are time series data.

In a possible implementation, obtaining the target data based on the first data and the second data includes:
obtaining, based on the first data, predicted data for the target moment after the first time period;
obtaining the second predicted data based on the second data; and
determining the target data based on the fusion result of the first predicted data and the second predicted data.

In a possible implementation, obtaining the target data based on the first data and the second data includes:
sending the first data and the second data to a server, and receiving the target data from the server.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, a first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the method further includes:
obtaining third data, where the third data, the second data, and the first data are time series data of different categories that is collected in a same scenario; and
obtaining the target data based on the first data and the second data includes:
   obtaining the target data based on the first data, the second data, and the third data, where the target data is a fusion result of the first predicted data, the second predicted data, and third predicted data, and the third predicted data is data that is determined based on the third data and that is related to a prediction bias of the second predicted data, or the third predicted data is data that is determined based on the third data and that is related to the prediction bias of the first predicted data.

In a possible implementation, the third predicted data is a predicted residual, determined based on the third data, of the first predicted data or the second predicted data.

In a possible implementation, the first predicted data is obtained by predicting, based on the first data by using the first model, data for the target moment after the first time period, and the second predicted data is data that is determined based on the second data by using a second model and that is related to the prediction bias of the first predicted data.

In a possible implementation, before obtaining the first data and the second data, the method further includes:
obtaining or sending, to a server, fourth data and fifth data, where the fourth data and the first data are data of a same category, the fifth data and the second data are data of a same category, the first model is obtained through training based on the fourth data, and the second model is obtained through training based on the fifth data.

In a possible implementation, the first data and the second data are sensor data related to a hazardous substance in a resource collection scenario.

This application further provides a data processing method. The method includes:
obtaining target data based on first data and second data, where the target data is a fusion result of first predicted data and second predicted data, the first predicted data is obtained by predicting a target category based on the first data, and the second predicted data is data that is determined based on the second data and that is related to a prediction bias of the first predicted data.

In a possible implementation, a priority of the first data is higher than a priority of the second data, and the priority is related to at least one of the following: a correlation with data of the target category, and data quality.

In a possible implementation, a first model is a base model, and the first data is a base predicted value.

In a possible implementation, the method further includes:
performing warning based on a relationship between the target data and a warning threshold.

In a possible implementation, the target data is gas information, and the first data and the second data are data related to the gas information.

In a possible implementation, the first data and the second data are data of different categories that is collected in a same scenario within a first time period, and the first predicted data is obtained by predicting, based on the first data, data for a target moment after the first time period.

In a possible implementation, the second predicted data is a predicted residual, determined based on the second data, of the first predicted data.

In a possible implementation, the first data and the second data are time series data.

In a possible implementation, obtaining the target data based on the first data and the second data includes:
obtaining, based on the first data, predicted data for the target moment after the first time period;
obtaining the second predicted data based on the second data; and
determining the target data based on the fusion result of the first predicted data and the second predicted data.

In a possible implementation, obtaining the target data based on the first data and the second data includes:
sending the first data and the second data to a server, and receiving the target data from the server.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the method further includes:
obtaining third data, where the third data, the second data, and the first data are time series data of different categories that is collected in a same scenario; and
obtaining the target data based on the first data and the second data includes:
   obtaining the target data based on the first data, the second data, and the third data, where the target data is a fusion result of the first predicted data, the second predicted data, and third predicted data, and the third predicted data is data that is determined based on the third data and that is related to a prediction bias of the second predicted data, or the third predicted data is data that is determined based on the third data and that is related to the prediction bias of the first predicted data.

In a possible implementation, the third predicted data is a predicted residual, determined based on the third data, of the first predicted data or the second predicted data.

In a possible implementation, the first predicted data is obtained by predicting, based on the first data by using the first model, data for the target moment after the first time period, and the second predicted data is data that is determined based on the second data by using a second model and that is related to the prediction bias of the first predicted data.

In a possible implementation, before obtaining the first data and the second data, the method further includes:
obtaining or sending, to a server, fourth data and fifth data, where the fourth data and the first data are data of a same category, the fifth data and the second data are data of a same category, the first model is obtained through training based on the fourth data, and the second model is obtained through training based on the fifth data.

In a possible implementation, the first data and the second data are sensor data related to a hazardous substance in a resource collection scenario.

According to a fourth aspect, this application provides a data processing apparatus. The apparatus includes:
a processing module, configured to: obtain first data; and obtain second data, where the second data and the first data are data of different categories; and
a transceiver module, configured to send, to a device side, a second model obtained through training based on the second data, where the second model is used to predict data related to a prediction bias of a base model.

In a possible implementation, the second model is used to perform residual prediction on the base model.

In a possible implementation, the first data and the second data include time series data within a same time period.

In a possible implementation, the first data and the second data include data collected in a same scenario within a first time period, and the first data further includes data collected at a target moment after the first time period.

Before sending, to the device side, the second model obtained through training based on the second data, the processing module is further configured to:
obtain, by using a first model, predicted data for the target moment based on data, in the first data, that is collected within the first time period; and
use, as a first ground-truth, a residual between the predicted data and the data, in the first data, that is collected at the target moment, and perform training based on data, in the second data, that is collected within the first time period, to obtain the second model.

In a possible implementation, the processing module is further configured to:
obtain third data, where the third data, the second data, and the first data are time series data of different categories that is collected in a same scenario; and
the transceiver module is further configured to send, to the device side, a third model obtained through training based on the third data, where the third model is used to predict data related to a prediction bias of the second model.

In a possible implementation, the third model is used to predict a predicted residual of a predicted residual of the second model.

In a possible implementation, the first data, the second data, and the third data include data collected in a same scenario within the first time period, and the first data further includes data collected at the target moment after the first time period; and
the processing module is further configured to: before sending, to the device side, the third model obtained through training based on the third data, obtain, by using the second model, a predicted residual for the first model based on data, in the second data, that is collected within the first time period; and
use a residual between the predicted residual and the first ground-truth as a second ground-truth, and perform training based on data, in the third data, that is collected within the first time period, to obtain the third model.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the first data and the second data are sensor data related to a hazardous substance in a resource collection scenario.

According to a fifth aspect, this application provides a data processing apparatus. The apparatus includes:
a transceiver module, configured to: send first data;
receive a first model, where the first model is obtained through training based on the first data, and the first model is a base model for time series prediction;
send second data, where the second data and the first data are data of different categories; and
receive a second model, where the second model is obtained through training based on the second data, and the second model is used to predict data related to a prediction bias of the base model.

In a possible implementation, the second model is used to perform residual prediction on the base model.

In a possible implementation, the first data and the second data include time series data within a same time period.

In a possible implementation, the transceiver module is further configured to:
send third data, where the third data, the second data, and the first data are time series data of different categories that is collected in a same scenario; and
receive a third model, where the third model is obtained through training based on the third data, and the third model is used to predict data related to a prediction bias of the second model.

In a possible implementation, the third model is used to predict a predicted residual of a predicted residual of the second model.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the transceiver module is further configured to:
send indication information, where the indication information indicates that the first data is used as a training sample for the base model for time series prediction.

In a possible implementation, the first data and the second data are sensor data related to a hazardous substance in a resource collection scenario.

According to a sixth aspect, this application provides a data processing apparatus. The apparatus includes:
a processing module, configured to: obtain first data and second data, where the first data and the second data are data of different categories that is collected in a same scenario within a first time period; and
obtain target data based on the first data and the second data, where the target data is a fusion result of first predicted data and second predicted data, the first predicted data is obtained by predicting, based on the first data, data for a target moment after the first time period, and the second predicted data is data that is determined based on the second data and that is related to a prediction bias of the first predicted data.

In a possible implementation, the second predicted data is a predicted residual, determined based on the second data, of the first predicted data.

In a possible implementation, the first data and the second data are time series data.

In a possible implementation, the processing module is specifically configured to:
obtain, based on the first data, predicted data for the target moment after the first time period;
obtain the second predicted data based on the second data; and
determine the target data based on the fusion result of the first predicted data and the second predicted data.

In a possible implementation, the processing module is specifically configured to:
send the first data and the second data to a server, and receive the target data from the server.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, a first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the processing module is further configured to:
obtain third data, where the third data, the second data, and the first data are time series data of different categories that is collected in a same scenario; and
the processing module is specifically configured to:
   obtain the target data based on the first data, the second data, and the third data, where the target data is a fusion result of the first predicted data, the second predicted data, and third predicted data, and the third predicted data is data that is determined based on the third data and that is related to a prediction bias of the second predicted data, or the third predicted data is data that is determined based on the third data and that is related to the prediction bias of the first predicted data.

In a possible implementation, the third predicted data is a predicted residual, determined based on the third data, of the first predicted data or the second predicted data.

In a possible implementation, the first predicted data is obtained by predicting, based on the first data by using the first model, data for the target moment after the first time period, and the second predicted data is data that is determined based on the second data by using a second model and that is related to the prediction bias of the first predicted data.

In a possible implementation, the processing module is further configured to: before obtaining the first data and the second data, obtain or send, to a server, fourth data and fifth data, where the fourth data and the first data are data of a same category, the fifth data and the second data are data of a same category, the first model is obtained through training based on the fourth data, and the second model is obtained through training based on the fifth data.

In a possible implementation, the first data and the second data are sensor data related to a hazardous substance in a resource collection scenario.

According to a seventh aspect, an embodiment of this application provides a data processing apparatus. The apparatus may include a memory, a processor, and a bus system. The memory is configured to store a program. The processor is configured to execute the program in the memory, to perform the method according to any one of the first aspect or the optional implementations of the first aspect, the method according to any one of the second aspect or the optional implementations of the second aspect, or the method according to any one of the third aspect or the optional implementations of the third aspect.

According to an eighth aspect, an embodiment of this application provides a computer-readable storage medium. The computer-readable storage medium stores a computer program. When the computer program is run on a computer, the computer is enabled to perform the method according to any one of the first aspect or the optional implementations of the first aspect, the method according to any one of the second aspect or the optional implementations of the second aspect, or the method according to any one of the third aspect or the optional implementations of the third aspect.

According to a ninth aspect, an embodiment of this application provides a computer program. When the computer program is run on a computer, the computer is enabled to perform the method according to any one of the first aspect or the optional implementations of the first aspect, the method according to any one of the second aspect or the optional implementations of the second aspect, or the method according to any one of the third aspect or the optional implementations of the third aspect.

According to a tenth aspect, this application provides a chip system. The chip system includes a processor, configured to support a data processing apparatus in implementing the functions in the foregoing aspects, for example, sending or processing data or information in the foregoing methods. In a possible design, the chip system further includes a memory. The memory is configured to store program instructions and data that are necessary for an execution device or a training device. The chip system may include a chip, or may include a chip and another discrete component.

### BRIEF DESCRIPTION OF DRAWINGS

FIG. 1A is a diagram of a structure of a main framework of artificial intelligence;
FIG. 1B and FIG. 1C are diagrams of application system frameworks according to the present invention;
FIG. 1D is a diagram of an optional hardware structure of a terminal;
FIG. 2 is a diagram of a structure of a server;
FIG. 3 to FIG. 5 are diagrams of a system architecture according to this application;
FIG. 6 shows a process of a cloud service;
FIG. 7 is a schematic flowchart of a data processing method according to an embodiment of this application;
FIG. 8 to FIG. 12b are schematic flowcharts of a data processing method according to an embodiment of this application;
FIG. 12c is a diagram of an interface according to an embodiment of this application;
FIG. 13 is a diagram of a structure of a data processing apparatus according to an embodiment of this application;
FIG. 14 is a diagram of a structure of a terminal device according to an embodiment of this application;
FIG. 15 is a diagram of a structure of a server according to an embodiment of this application; and
FIG. 16 is a diagram of a structure of a chip according to an embodiment of this application.

### DESCRIPTION OF EMBODIMENTS

The following describes embodiments of the present invention with reference to the accompanying drawings in embodiments of the present invention. Terms used in embodiments of the present invention are merely intended to describe specific embodiments of the present invention, but not to limit the present invention.

The following describes embodiments of this application with reference to the accompanying drawings. A person of ordinary skill in the art can know that the technical solutions provided in embodiments of this application are also applicable to similar technical problems with development of technologies and emergence of a new scenario.

In this specification, the claims, and the accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover a non-exclusive inclusion, so that a process, a method, a system, a product, or a device that includes a series of units is not necessarily limited to the units, but may include other units that are not clearly listed or are inherent to the process, the method, the product, or the device.

The terms "substantially (substantially)", "about (about)", and the like used in this specification are approximation terms rather than degree terms, and are intended to take into account inherent deviations of measured values or calculated values that are known to a person of ordinary skill in the art. In addition, in descriptions of embodiments of the present invention, "may (may)" indicates "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (exemplary)" is intended to indicate an example or an illustration.

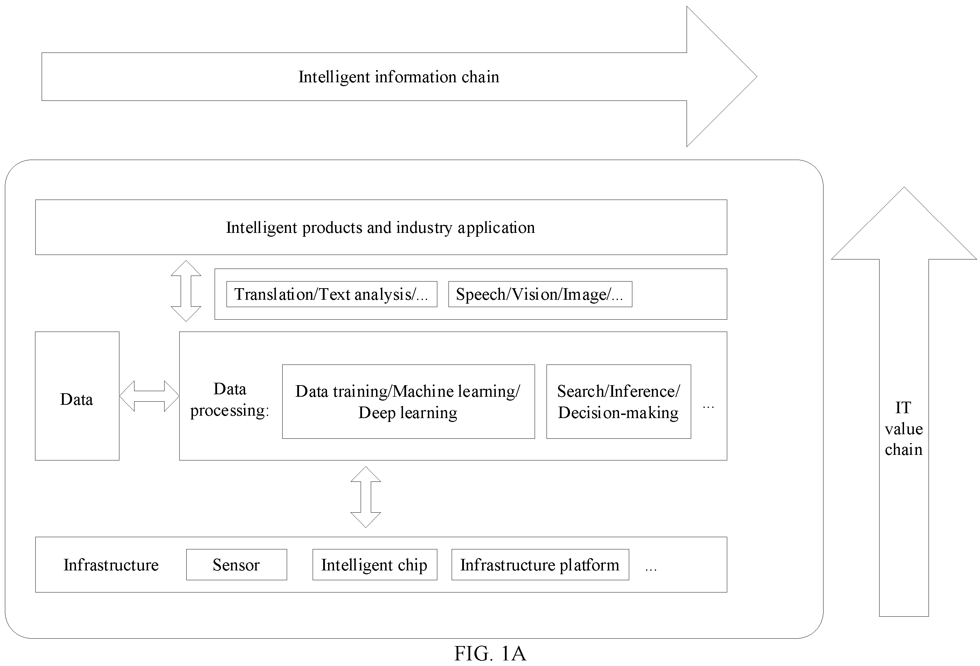

First, an overall operation process of an artificial intelligence system is described. FIG. 1A is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" indicates a process from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" indicates value brought by artificial intelligence to the information technology industry in a process from underlying infrastructure and information (implemented by providing and processing technologies) of artificial intelligence to industrial ecology of a system.

### (1) Infrastructure

The infrastructure provides computing capability support for the artificial intelligence system, implements communication with the outside world, and implements support through an infrastructure platform. Communication with the outside is performed through a sensor. A computing capability is provided by an intelligent chip (a hardware acceleration chip, for example, a CPU, an NPU, a GPU, an ASIC, or an FPGA). The infrastructure platform includes platform assurance and support related to a distributed computing framework, a network, and the like, and may include cloud storage and computing, an interconnection network, and the like. For example, the sensor communicates with the outside to obtain data, and the data is provided for an intelligent chip in a distributed computing system provided by the infrastructure platform to perform computing.

### (2) Data

Data at an upper layer of the infrastructure indicates a data source in the artificial intelligence field. The data relates to graphics, images, speech, and text, and further relates to internet of things data of conventional devices, including service data of an existing system and sensory data such as force, displacement, a liquid level, temperature, and humidity.

### (3) Data processing

The data processing usually includes data training, machine learning, deep learning, searching, inference, decision-making, and the like.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. A typical function is searching and matching.

The decision-making is a process of making a decision after intelligent information is inferred, and usually provides classification, ranking, prediction, and other functions.

### (4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

### (5) Intelligent products and industry application

The intelligent products and the industry application are products and application of the artificial intelligence system in various fields, are obtained by packaging an overall artificial intelligence solution, and implement productization and practical application of intelligent information decision-making. Application fields of the artificial intelligence system include intelligent terminals, intelligent transportation, intelligent healthcare, autonomous driving, a smart city, and the like.

An application scenario of this application is first described. This application may be applied to, but not limited to, an application with a time series data prediction function (which may be referred to as a prediction application below), a cloud service provided by a cloud-side server, or the like. Descriptions are separately provided below.

### 1. Prediction application

In embodiments of this application, a product form may be a prediction application. The prediction application may be run on a terminal device or a cloud-side server.

In a possible implementation, the prediction application may implement a time series data prediction task based on input data (for example, time series data). The prediction application may perform the time series data prediction task in response to the entered input data (for example, the time series data), to obtain predicted data.

For example, the time series data prediction task may be but is not limited to:
a time series prediction task: predicts a future value of a time series;
a spatiotemporal prediction task: is similar to time series prediction, but is used for a plurality of locations or tracks;
an overrun forecast task: predicts whether an upcoming value is to exceed a predefined threshold;
an exception detection task: detects, in a timely manner, a rare but destructive event for which an action needs to be taken;
a time series classification task: classifies time series into predefined categories; and
a survival analysis task: predicts time at which an event of interest is to occur.

It should be noted that embodiments of this application are more likely to be applied to a time series prediction task in a related field with hierarchical signal data. A hierarchical signal may be understood as performing data prediction by using a plurality of different time series related to to-be-predicted data.

For example, in a scenario of mining a coal mine (for example, during underground mining of a metal mine or a non-metal mine (typically a coal mine)), a gas concentration may be predicted based on a time series such as a gas concentration, a wind speed, wind pressure, carbon monoxide, temperature, a coal cutting speed, a gas drainage amount, or gas pumping pressure. Alternatively, other gases such as carbon monoxide and carbon dioxide may be predicted.

For example, in a scenario of dust monitoring and prediction for a factory, a main cause of dust lies in processing, such as drilling, crushing, cutting, and moving, performed on a solid material through external forces and machinery. Dust density is a main cause of dust explosion. A detection system collects dust density in the air mainly through an online dust detector sensor. The dust density may be used as base-layer data. Secondary factors such as air humidity, temperature, and an air flow speed are used as a secondary-priority set. Machine operation data and manual operation data are used as a data set at another layer.

For example, in a scenario of the chemical industry, for example, in coal chemistry, for release of a hazardous substance, a concentration of the hazardous substance may be predicted based on information such as an amount of a raw material (a main material or an auxiliary material) of a chemical reaction, reaction temperature, time, and a mixing speed.

For example, in a scenario of the metallurgy industry, temperature of a product taken out of a furnace may be predicted based on status sensor data (heating power, an amount of a raw material, temperature of the raw material, an amount of an auxiliary material, temperature of the auxiliary material, wall temperature of a reaction furnace, and the like).

For example, in a scenario of the mineral processing industry, a product grade may be predicted based on statuses such as a crushing granularity, a reagent dosage, and a settling speed that are controlled by adjusting device parameters for raw ore.

In addition, a gas leakage amount may also be predicted in a scenario of predicting underground gas pipeline leakage.

In a possible implementation, a user may start a prediction application installed on a terminal device, and enter input data (for example, time series data). The prediction application may perform data prediction on the input data by using a method provided in embodiments of this application, and present predicted data to the user (a manner of presentation may be but is not limited to displaying, saving, uploading to a cloud side, or the like).

In a possible implementation, a user may start a prediction application installed on a terminal device, and enter input data. The prediction application may send the input data to a cloud-side server. The cloud-side server performs data prediction on the input data by using a method provided in embodiments of this application, and returns predicted data to the terminal device. The terminal device may present the predicted data to the user (a manner of presentation may be but is not limited to displaying, saving, uploading to a cloud side, or the like).

The following describes the prediction application in embodiments of this application separately from a perspective of a functional architecture and a perspective of a product architecture for implementing a function.

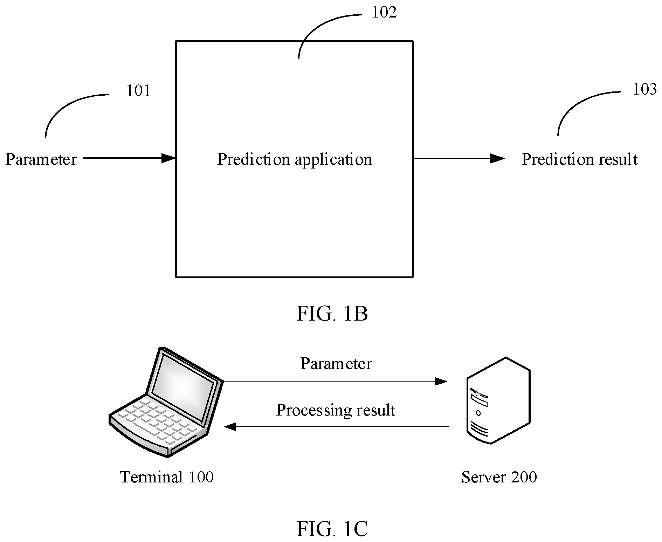

FIG. 1B is a diagram of a functional architecture of a prediction application according to an embodiment of this application.

In a possible implementation, as shown in FIG. 1B, the prediction application 102 may receive an input parameter 101 (for example, including input data) and generate a prediction result 103. The prediction application 102 may be executed (for example) in at least one computer system, and includes computer code. When the computer code is executed by one or more computers, the computer is enabled to execute a natural language model obtained through training by using a method provided in embodiments of this application.

FIG. 1C is a diagram of an entity architecture for running a prediction application according to an embodiment of this application.

FIG. 1C is a diagram of an architecture of a system. The system may include a terminal 100 and a server 200. The server 200 may include one or more servers (in FIG. 1C, an example in which the server 200 includes one server is used for description), and the server 200 may provide, for one or more terminals, a service for a synthetic function.

A prediction application may be installed on the terminal 100, or a web page related to the synthetic function may be opened. The application and the web page may provide an interface. The terminal 100 may receive a related parameter input by a user on an interface of the synthetic function, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter, without cooperation of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

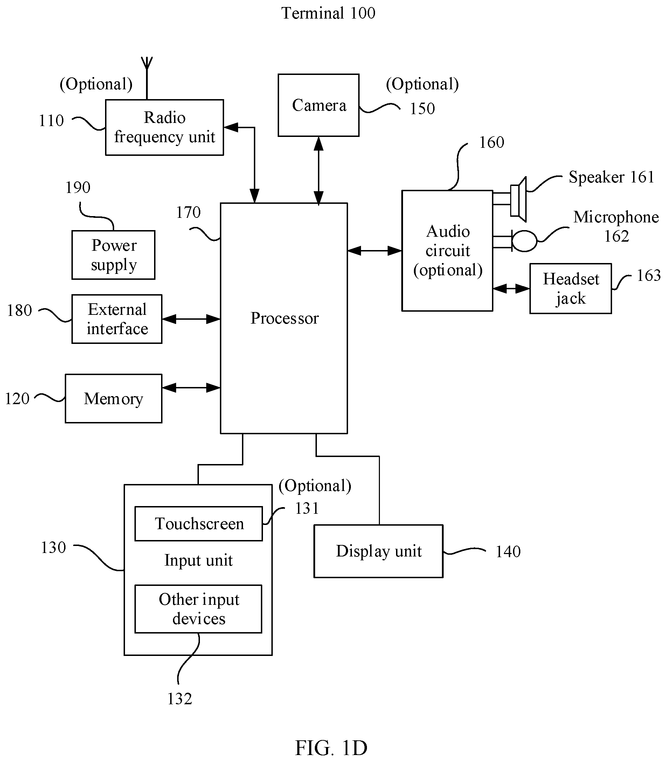

FIG. 1D is a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 1D is merely an example of the terminal or a multi-functional device but constitutes no limitation on the terminal or the multi-functional device. The terminal or the multi-functional device may include more or fewer components than those shown in the figure, or some components may be combined, or there may be different components.

The input unit 130 may be configured to receive input digital or character information, and generate a key signal input related to a user setting and function control of the portable multi-functional apparatus. Specifically, the input unit 130 may include a touchscreen 131 (optional) and/or other input devices 132. The touchscreen 131 may collect a touch operation performed by a user on or near the touchscreen 131 (for example, an operation performed by the user on or near the touchscreen by using any proper object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may further include the other input devices. Specifically, the other input devices 132 may include but are not limited to one or more of the following: a physical keyboard, a functional key (for example, a volume control key 132 or an on/off key 133), a trackball, a mouse, a joystick, and the like.

The input device 132 may receive entered input data or the like.

The display unit 140 may be configured to display information input by the user, information provided for the user, various menus of the terminal 100, an interaction interface, a file, and/or playing of any multimedia file. In embodiments of this application, the display unit 140 may be configured to display an interface of a prediction application, predicted data that is generated, and the like.

The memory 120 may be configured to store instructions and data. The memory 120 may mainly include an instruction storage area and a data storage area. The data storage area may store various types of data such as a multimedia file and text. The instruction storage area may store software units such as an operating system, an application, and instructions for at least one function, or subsets and extended sets thereof. The memory 120 may further include a non-volatile random access memory, and provide the following for the processor 170: managing hardware, software, and data resources on a computing processing device, and supporting control on software and an application. The memory 120 is further configured to store a multimedia file, and store a running program and an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated into the processor 170. The application processor mainly processes an operating system, a user interface, an application program, and the like. The modem processor mainly processes wireless communication. It can be understood that the modem processor may alternatively not be integrated into the processor 170. In some embodiments, the processor and the memory may be implemented on a single chip. In some embodiments, the processor and the memory may alternatively be implemented on separate chips. The processor 170 may be further configured to: generate a corresponding operation control signal, send the operation control signal to a corresponding component in the computing processing device, and read and process data in software, especially, read and process the data and the program in the memory 120, to enable each functional module to perform a corresponding function, to control a corresponding component to perform an action according to a requirement of an instruction.

The memory 120 may be configured to store software code related to a data processing method. The processor 170 may perform steps of a data processing method of a chip, or may schedule another unit (for example, the input unit 130 and the display unit 140) to implement a corresponding function.

The radio frequency unit 110 (optional) may be configured to send and receive signals in an information sending/receiving process or a call process, for example, receive downlink information from a base station and then send the downlink information to the processor 170 for processing, or send uplink-related data to a base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send input data to the server 200, and receive predicted data sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 through a power management system, to implement functions such as charging and discharging management and power consumption management through the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of methods described below may be applied to the terminal 100 shown in FIG. 1D.

The following describes a product form of the server 200 in FIG. 1C.

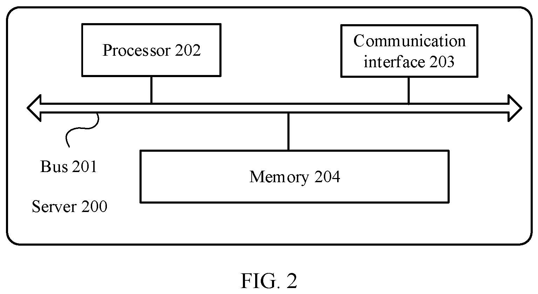

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 2 for representation, but this does not mean that there is only one bus or only one type of bus.

The processor 202 may be any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to a data processing method. The processor 202 may perform steps of a data processing method of a chip, or may schedule another unit to implement a corresponding function.

It should be understood that the terminal 100 and the server 200 may be central or distributed devices. A processor (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processing, DSP), a microprocessor, or a microcontroller), or a combination of these hardware circuits. For example, the processor may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

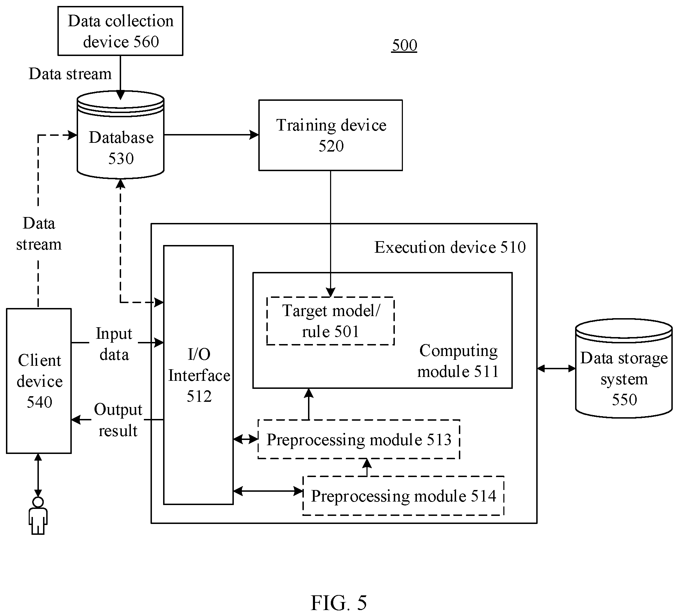

It should be understood that steps related to a model inference process in embodiments of this application relate to an AI-related operation. When the AI operation is performed, an instruction execution architecture of the terminal device and the server is not limited to the foregoing architecture in which the processor and the memory are combined. A system architecture provided in embodiments of this application is described below in detail with reference to FIG. 5.

FIG. 5 is a diagram of a system architecture according to an embodiment of this application. As shown in FIG. 5, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501. The preprocessing module 513 and the preprocessing module 514 are optional.

The execution device 510 may be the foregoing terminal device or server on which the prediction application is run.

The data collection device 560 is configured to collect a training sample. The training sample may be a program file (including a plurality of categories of time series data) or the like. After collecting the training sample, the data collection device 560 stores the training sample in the database 530.

The training device 520 may train a to-be-trained neural network based on the training sample maintained in the database 530, to obtain the target model/rule 501.

It should be noted that, during actual application, the training sample maintained in the database 530 is not necessarily collected by the data collection device 560, and may alternatively be received from another device. In addition, it should be noted that the training device 520 does not necessarily obtain the target model/rule 501 through training completely based on the training sample maintained in the database 530, and may alternatively perform model training by obtaining a training sample from a cloud or another position. The foregoing descriptions should not be construed as a limitation on embodiments of this application.

The target model/rule 501 obtained through training by the training device 520 may be applied to different systems or devices, for example, applied to the execution device 510 shown in FIG. 5. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 5, the execution device 510 is provided with the input/output (input/output, I/O) interface 512, configured to exchange data with an external device. A user may input data (for example, input data in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may be directly used to process the input data.

When the execution device 510 preprocesses the input data, or when the computing module 511 in the execution device 510 performs a related processing process such as computing, the execution device 510 may invoke data, code, or the like in the data storage system 550 for corresponding processing, or may store data, instructions, or the like obtained through corresponding processing in the data storage system 550.

Finally, the I/O interface 512 provides a processing result (for example, predicted data) for the client device 540, to provide the processing result for the user.

In the case shown in FIG. 5, the user may manually provide the input data, and "manually providing the input data" may be implemented through an operation on an interface provided by the I/O interface 512. In another case, the client device 540 may automatically send the input data to the I/O interface 512. If the client device 540 needs to automatically send the input data, authorization needs to be obtained from the user. In this case, the user may set corresponding permission on the client device 540. The user may view, on the client device 540, a result output by the execution device 510. The result may be specifically presented in a manner of displaying, sound, an action, or the like. The client device 540 may alternatively serve as a data collection terminal, to collect the input data input to the I/O interface 512 and the output result output by the I/O interface 512 that are shown in the figure, and store the input data and the output result in the database 530 as new sample data. Certainly, the client device 540 may alternatively not perform collection, and the I/O interface 512 directly stores, in the database 530 as new sample data, the input data input to the I/O interface 512 and the output result output by the I/O interface 512 that are shown in the figure.

It should be noted that FIG. 5 is merely a diagram of a system architecture according to an embodiment of this application. A positional relationship between devices, components, modules, and the like shown in the figure does not constitute any limitation. For example, in FIG. 5, the data storage system 550 is an external memory relative to the execution device 510. In another case, the data storage system 550 may alternatively be deployed in the execution device 510. It should be understood that the execution device 510 may be deployed in the client device 540.

Details from a perspective of model inference are as follows:
In embodiments of this application, the computing module 511 in the execution device 510 may obtain the code stored in the data storage system 550, to implement steps related to a model inference process in embodiments of this application.

In embodiments of this application, the computing module 511 in the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

Specifically, the computing module 511 in the execution device 510 may be a hardware system with an instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 in the execution device 510 may be a combination of a hardware system without an instruction execution function and a hardware system with an instruction execution function. Some of the steps related to the model inference process provided in embodiments of this application may be implemented by the hardware system without an instruction execution function in the computing module 511 in the execution device 510. This is not limited herein.

Details from a perspective of model training are as follows:
In embodiments of this application, the training device 520 may obtain code stored in a memory (which is not shown in FIG. 5, and may be integrated into the training device 520 or deployed separately from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processing, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that the training device 520 may be a combination of a hardware system without an instruction execution function and a hardware system with an instruction execution function. Some of the steps related to model training provided in embodiments of this application may be implemented by the hardware system without an instruction execution function in the training device 520. This is not limited herein.

### 2. Cloud service for a data prediction function provided by a server:

In a possible implementation, the server may provide, for a device side, a service for a data prediction function through an application programming interface (application programming interface, API).

A terminal device may send a related parameter (for example, including input data) to the server through an API provided by a cloud. The server may obtain a processing result (for example, predicted data) based on the received parameter, and return the processing result to the terminal.

For descriptions of the terminal and the server, refer to the descriptions in the foregoing embodiments. Details are not described herein again.

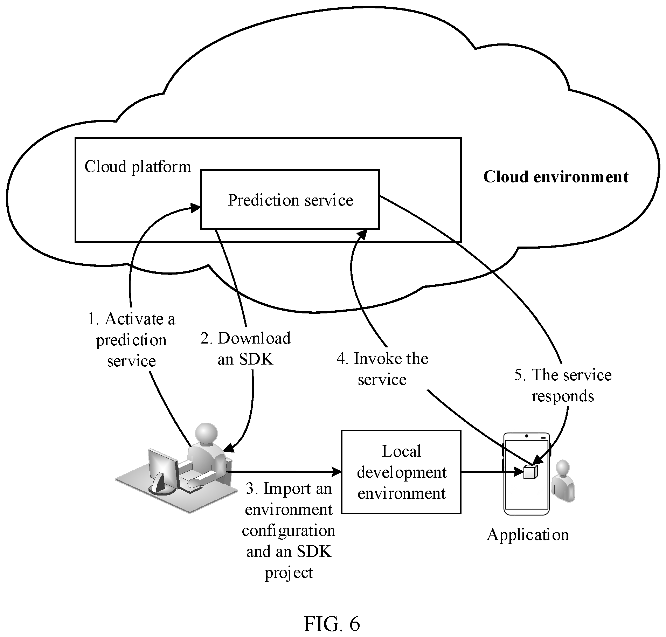

FIG. 6 shows a process of using a cloud service for a data prediction function provided by a cloud platform.
1. Activate and purchase a prediction service.
2. A user may download a software development kit (software development kit, SDK) corresponding to the prediction service. Usually, the cloud platform provides SDKs of a plurality of development versions for the user to select according to a requirement of a development environment, for example, a Java-version SDK, a Python-version SDK, a PHP-version SDK, and an Android-version SDK.
3. The user downloads an SDK of a corresponding version locally as needed, imports an SDK project to a local development environment, and configures and debugs the SDK project in the local development environment. The local development environment may be further used for developing other functions, to form an application that integrates data prediction function capabilities.
4. When a data prediction function application needs to perform a synthetic function during use, an invocation of a synthetic function API may be triggered. When an application triggers a synthetic function, an API request is initiated to a running instance of a service for a data prediction function in a cloud environment. The API request carries input data. The running instance in the cloud environment processes the input data to obtain a processing result (for example, predicted data).
5. The cloud environment returns the processing result to the application, to complete one invocation of the service for the data prediction function.

### 3. Provision cloud service for a data prediction model provided by a server:

In a possible implementation, the server may provide, for a device side through an application programming interface (application programming interface, API), a service for providing a function for data prediction. To be specific, the service provides, for the device side according to a requirement of the device side, a service for a time series prediction model that can meet the requirement of the device side.

A terminal device may send a related parameter (for example, including input data) to the server through an API provided by a cloud. The server may obtain a processing result (for example, a data prediction model) based on the received parameter, and return the processing result to the terminal.

For descriptions of the terminal and the server, refer to the descriptions in the foregoing embodiments. Details are not described herein again.

In addition to an application and a cloud service, an implementation form of this application may alternatively be a large model inference acceleration library or a large model application SDK.

For ease of understanding solutions in embodiments of this application, the following briefly describes possible application scenarios of embodiments of this application with reference to FIG. 2 to FIG. 4 by using text generation as an example.

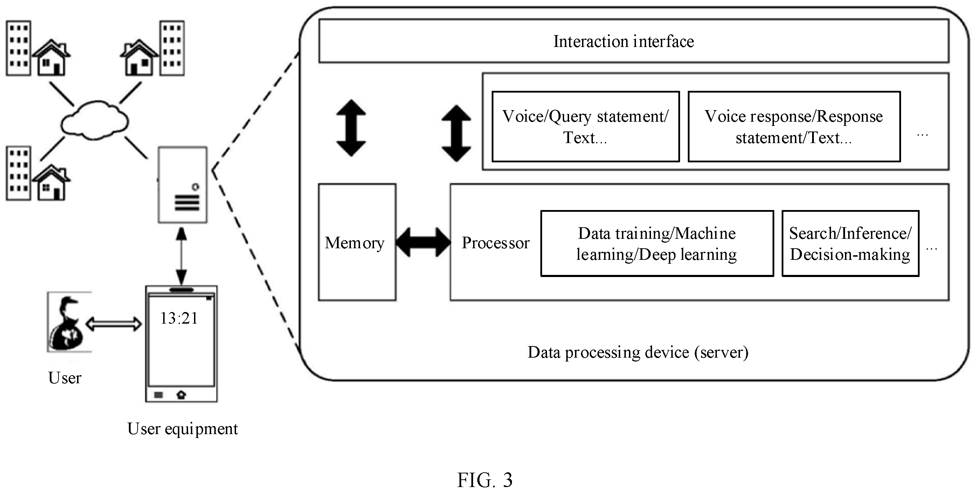

FIG. 3 shows a time series data prediction system. The time series data prediction system includes user equipment and a data processing device. The user equipment includes an intelligent terminal, for example, a mobile phone, a personal computer, or an information processing center. The user equipment is an initiator of natural language data processing, and serves as an initiator of a language-based question answering or query request or the like. A user usually initiates a request by using the user equipment.

The data processing device may be a device or a server with a data processing function, for example, a cloud server, a network server, an application server, or a management server. The data processing device receives a query statement, speech, text, or the like from the intelligent terminal through an interaction interface; performs language data processing in a manner of machine learning, deep learning, searching, inference, decision-making, or the like by using a memory for storing data and a processor for processing data; and then feeds back a processing result to the user equipment. The memory in the data processing device may be a collective term, and includes a local storage and a database for storing historical data. The database may be deployed on the data processing device or another network server.

In the time series data prediction system shown in FIG. 3, the user equipment may receive an instruction from a user. For example, the user equipment may receive a segment of time series data entered by the user, and then initiate a request to the data processing device, so that the data processing device obtains, for the user equipment, future data predicted based on the entered time series data.

In this embodiment of this application, the user equipment may receive an instruction from a user. For example, the user equipment may receive a segment of time series data entered by the user, and then initiate a request to the data processing device, so that the data processing device runs a time series data prediction application for the segment of time series data obtained by the user equipment, to obtain future data predicted based on the entered time series data.

In FIG. 3, the data processing device may process the foregoing text data by using a method provided in embodiments of this application.

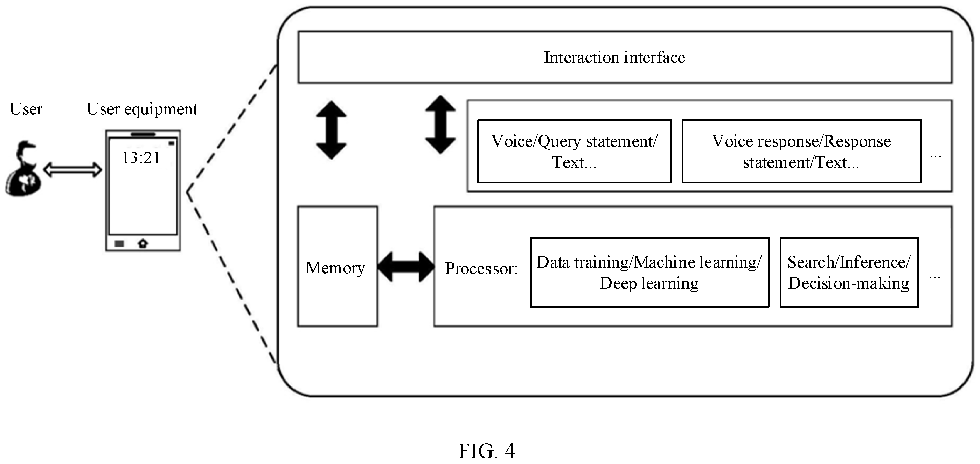

FIG. 4 shows another time series data prediction system. In FIG. 4, user equipment directly serves as a data processing device. The user equipment can directly receive an input from a user, and hardware of the user equipment directly performs processing. A specific process is similar to that in FIG. 3. Refer to the foregoing descriptions. Details are not described herein again.

In FIG. 3 and FIG. 4, a processor may perform data training, machine learning, or deep learning by using a neural network model or another model, and use, for time series data, a model (for example, a first model, a second model, or a third model in embodiments of this application) finally obtained through data training or learning, to obtain a corresponding processing result.

Embodiments of this application relate to massive application of a neural network. Therefore, for ease of understanding, the following first describes related terms and related concepts such as the neural network in embodiments of this application.

### (1) Neural network

The neural network may include a neuron. The neuron may be an operation unit that uses xₛ (namely, input data) and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$

s=1, 2, ..., or n, n is a natural number greater than 1, Wₛ is a weight of xₛ, and b is a bias of the neuron. f is an activation function (activation function) of the neuron, and is used to introduce a nonlinear characteristic into the neural network, to convert an input signal in the neuron into an output signal. The output signal of the activation function may serve as an input for a next convolutional layer, and the activation function may be a sigmoid function. The neural network is a network formed by connecting a plurality of individual neurons together. To be specific, an output of a neuron may be an input for another neuron. An input for each neuron may be connected to a local receptive field of a previous layer to extract a feature of the local receptive field. The local receptive field may be an area including several neurons.

(2) Gas: a gas mixture that mainly includes methane, together with carbon dioxide and nitrogen, and that is emitted from a coal seam. The gas is a hazardous factor during coal mine production. The gas not only pollutes air and causes suffocation, but also causes a fire or an explosion upon a flame when gas content in the air ranges from 5% to 16%. Coal is a solid of a porous structure. The gas is absorbed in pores and is emitted when being disturbed by mining. An emission amount is directly proportional to the following factors: gas content in the coal seam, exposed surface area of the coal seam, stress of the coal seam, or the like (the coal seam is similar to a sponge that absorbs perfume).

(3) Gas concentration exceeding a threshold: A gas concentration in a region under a coal mine exceeds a specified threshold. Supervisory departments such as national ministries and commissions, provinces, cities, counties, and coal mine groups have specific requirements on gas concentration thresholds at different locations under a coal mine. The threshold usually ranges from 0.8% to 1.2%. Usually, a subordinate unit has a stricter requirement (a lower threshold) than that of a superior unit.

(4) Underground coal mine: a coal mine to which an underground mining mode is applied, and an underground mining system including a mine shaft and a mine roadway.

(5) Roadway: various channels (similar to tunnels) formed between the earth's surface and an ore body through drilling, for ore transportation, ventilation, drainage, and passage of people and equipment.

(6) Coal face: In a broad sense, the coal face is an operation location at which minerals or rocks are directly mined. The coal face moves along with a mining progress, and is usually enclosed by a to-be-mined coal seam and a U-shaped roadway (this is merely an example, and the roadway is not limited to the U shape). In a narrow sense, the coal face is a roadway at the bottom of a U-shaped roadway, and main coal mining equipment (for example, a coal shearer and a hydraulic support) is deployed here.

(7) Coal shearer: one of the most common coal mining equipment in an underground coal mine. The coal shearer is used to cut coal (shear coal) from a coal wall, and moves back and forth on an operation face to shear coal. The coal shearer functions like a big hammer used for demolishing walls during decoration.

(8) Hydraulic support: one of the most common coal mining equipment in an underground coal mine. The hydraulic support is used to resist formation pressure and support machinery in space on a coal face. The hydraulic support functions like a column that supports a ceiling in a building.

(9) Centralized control system: a centralized control system for coal mining equipment such as an underground coal shearer and a hydraulic support. The centralized control system is used for data access, status monitoring, and remote control of an airborne sensor. The centralized control system is not a system required according to policies. Only an intelligent operation face is equipped with the centralized control system. Different mines have different types of monitoring sensors. For example, a mine has only a coal shearer location sensor, without a column pressure sensor for a hydraulic support, or has both sensors.

### (10) Back propagation algorithm

During training, a convolutional neural network may modify a value of a parameter in an initial super-resolution model by using an error back propagation (back propagation, BP) algorithm, so that a reconstruction error loss of the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

### (11) Loss function

During training for a deep neural network, because an output of the deep neural network is expected to be close, as much as possible, to a predicted value that is actually expected, a predicted value of a current network may be compared with a target value that is actually expected, and then a weight vector of each layer of the neural network is updated based on a difference between the predicted value and the target value (certainly, before a 1^{st} update, an initialization process is usually performed, to be specific, parameters are preconfigured for all layers of the deep neural network). For example, if the predicted value of the network is large, the weight vector is adjusted to decrease the predicted value, and adjustment is continuously performed until the deep neural network can obtain, through prediction, the target value that is actually expected or a value that is quite close to the target value that is actually expected. Therefore, "how to obtain, through comparison, a difference between a predicted value and a target value" needs to be predefined. This is the loss function (loss function) or an objective function (objective function). The loss function and the objective function are important equations for measuring a difference between a predicted value and a target value. The loss function is used as an example. A larger output value (loss) of the loss function indicates a greater difference. Therefore, training of a deep neural network is a process of minimizing the loss.

A time series data prediction task is a future-data prediction task performed based on historical time series data. For more accurate prediction, input data is usually a plurality of categories of data related to to-be-predicted data. For example, during gas concentration prediction in the coal mining field, data like a gas concentration, a wind speed, wind pressure, carbon monoxide, temperature, a coal cutting speed, a gas drainage amount, or gas pumping pressure is used as an input to predict a future gas concentration.

An existing prediction task is usually completed only by using a single algorithm model. In this manner, a quantity of dimensions of an input feature of the model is fixed. To be specific, a quantity of categories of input data is fixed during model training and inference. When input data is missing, there is no input in a corresponding dimension, leading to an algorithm failure or low prediction accuracy.

To resolve the foregoing problems, embodiments of this application provide a data processing method. The following describes in detail a model training method in embodiments of this application with reference to the accompanying drawings.

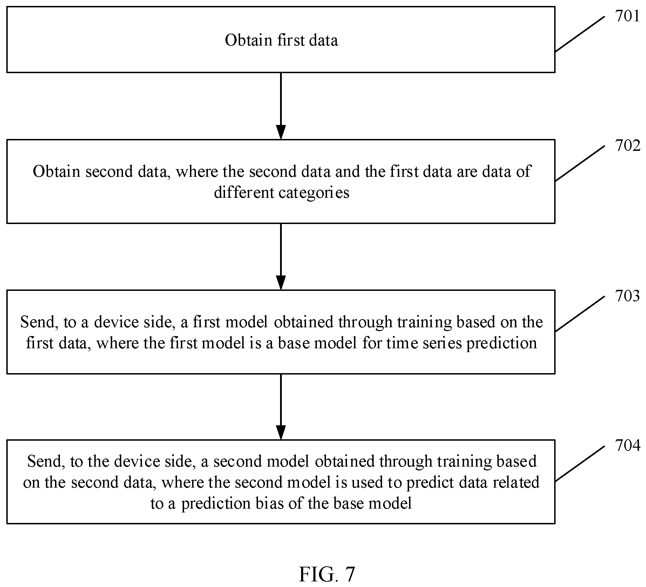

FIG. 7 is a schematic flowchart of a data processing method according to an embodiment of this application. As shown in FIG. 7, the data processing method provided in this embodiment of this application may include steps 701 to 704. The following separately describes these steps in detail.

701: Obtain first data.

702: Obtain second data, where the second data and the first data are data of different categories.

Step 701 may be performed by a server.

In a possible implementation, the server may receive the first data and the second data (for example, but not limited to, data sent by a device side), where the first data and the second data may be time series data, the first data may be used as training data for a first model, and the second data may be used as training data for a second model.

The first data and the second data are time series data of different categories.

The first data and the second data may not be time series data, but may be converted into time series data in a specific mapping manner.

For more accurate prediction, input data is usually a plurality of categories of data related to to-be-predicted data. For example, during gas concentration prediction in the coal mining field, data like a gas concentration, a wind speed, wind pressure, carbon monoxide, temperature, a coal cutting speed, a gas drainage amount, or gas pumping pressure is used as an input.

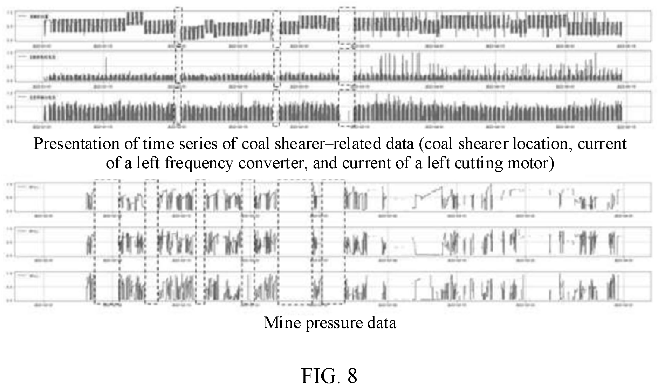

However, input data is usually missing. For example, in a mine environment, because the mine environment is unstable, sensors and network devices are greatly affected by environmental factors and frequently fail. Consequently, some categories of data are missing for a long time (on an hourly basis or a daily basis) (as shown in FIG. 8), leading to unreliability of input data for training and affecting prediction accuracy.

An idea of this application is to divide input data into layers, where each layer of data may include one or more categories of time series data, a corresponding model may be trained for each layer of data, and a final prediction result is obtained by fusing prediction results of a plurality of models. In this way, even if data at some layers is missing, prediction can still be performed by using data that is not missing and a corresponding model, to ensure prediction effect. In addition, because data of a large quantity of categories is not used as an input for a same model, even if data of some categories is missing, an algorithm model can still be feasible and effective.

In a possible implementation, a ground-truth used during training of a model corresponding to one or more layers of data may be set to to-be-predicted data (for ease of description, the model may be referred to as a model used for predicting a to-be-predicted data subject, that is, a base model), and a ground-truth used during training of a model corresponding to data at another layer is set to a predicted residual of the model. The predicted residual may be understood as a prediction result for a difference between a prediction result of the model and a real result.

In a possible implementation, because a value of a predicted residual is quite small relative to a predicted data subject, when input data of a corresponding category for a model used for predicting a residual is missing, impact on final predicted data is quite small. Therefore, data with higher reliability (to be specific, data with a lower possibility of data missing, or data with a higher correlation with the to-be-predicted data subject) may be selected as input data for a model used for predicting the to-be-predicted data subject. Therefore, during model training or inference, because the input data for the model used for predicting the to-be-predicted data subject is less likely to be missing, the model used for the to-be-predicted data subject is used, to improve prediction accuracy.

In a possible implementation, the first data is sensor data of a first category, and the second data is sensor data of a second category. A possibility of data missing during collection of the sensor data of the first category is lower than a possibility of data missing during collection of the sensor data of the second category.

In a possible implementation, the first data is sensor data of a first category, and the second data is sensor data of a second category. The first model is used to predict sensor data of a third category based on the sensor data of the first category, where a correlation between the sensor data of the first category and the sensor data of the third category is higher than a correlation between the sensor data of the second category and the sensor data of the third category.

That is, the first data and the second data may be data at different layers described above. It should be understood that data layer division may be preset, or may be specified by a user.

For example, in a possible implementation, the server may receive indication information sent by the device side, where the indication information indicates that the first data is used as a training sample for the base model for time series prediction.

For example, during online dust detection, a main cause of dust lies in processing, such as drilling, crushing, cutting, and moving, performed on a solid material through external forces and machinery. Dust density is a main cause of dust explosion. A detection system collects dust density in the air mainly through an online dust detector sensor. The dust density may be used as base-layer data. Secondary factors such as air humidity, temperature, and an air flow speed are used as a secondary-priority set. Machine operation data and manual operation data are used as a data set at another layer.

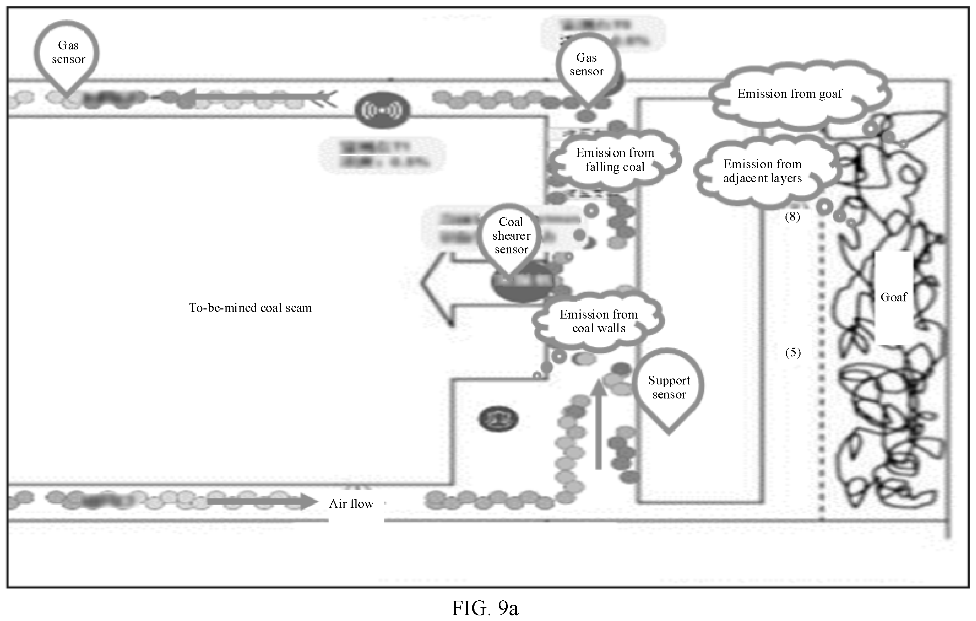

For another example, gas concentration prediction in an underground mining scenario is used as an example. A signal collection device includes a plurality of types of sensors. As shown in FIG. 9a, collected gas concentration-related data, for example, but not limited to, gas-related signals such as a gas concentration, a wind speed, power of a coal shearer, pressure of a hydraulic support, and a stroke of the hydraulic support, is classified and is used as a data input for training models at different levels.

On an operation face, wind flows in a U-shaped roadway (or in other shapes) in one direction. A source of gas emission mainly includes an exposed coal wall, mined coal (falling coal), mined but not completely recycled coal (goaf), and emission from upper and lower adjacent coal seams (adjacent layers). A gas sensor (the sensor is a part of a safety monitoring system, monitors a gas concentration, a wind speed, and the like, and indicates a gas concentration distribution in roadway space and a gas overflow status in the goaf), a coal shearer sensor (the sensor monitors a location of the coal shearer, cutting power, a cutting current, an airborne gas concentration, and the like, and indicates an amount of falling coal and a fresh coal wall exposure speed), a hydraulic support sensor (the sensor monitors column pressure of the hydraulic support and the like, and indicates a status of gas emission from adjacent layers and coal walls due to formation pressure), and the like are distributed in the roadway to monitor statuses of gas-related influencing factors.

Environmental sensing mainly relies on the sensors of the safety monitoring system, to monitor the gas concentration, the wind speed, and the like in the roadway. Device monitoring mainly relies on various monitoring sensors in coal mining equipment, to monitor the location of the coal shearer, the cutting power and the cutting current of the coal shearer, the airborne gas concentration of the coal shearer, the column pressure of the hydraulic support, and the like. Raw data of all the sensors is uploaded to a database of a server in a data center above the ground through an underground industrial ring network for querying by various applications.

Gas concentration data (a gas concentration at an upper corner of the operation face), coal shearer data (the location of the coal shearer and the cutting current of the coal shearer), and hydraulic support data (column pressure 1# to 183# of the hydraulic support) are read from the mine database. Example data is as follows:

**Table 1 Gas concentration at the upper corner of the operation face**

| | | | | | | |
|---|---|---|---|---|---|---|
| Timestamp | ... | 2022-02-15 | 2022-02-15 | 2022-02-15 | 2022-02-15 | ... |
| | | 12:58:55 | 13:00:33 | 13:01:03 | 13:01:06 | |
| Concentration value | ... | 0.45 | 0.44 | 0.45 | 0.44 | ... |

**Table 2 Location of the coal shearer**

| | | | | | | |
|---|---|---|---|---|---|---|
| Timestamp | ... | 2022-02-15 | 2022-02-15 | 2022-02-15 | 2022-02-15 | ... |
| | | 13:00:00 | 13:00:15 | 13:00:30 | 13:00:45 | |
| Location | ... | 124.9998474 | 124.9998474 | 124.3999847 | 123.0003052 | ... |

**Table 3 Cutting current of the coal shearer**

| | | | | | | |
|---|---|---|---|---|---|---|
| Timestamp | ... | 2022-02-15 | 2022-02-15 | 2022-02-15 | 2022-02-15 | ... |
| | | 13:00:00 | 13:00:01 | 13:00:02 | 13:00:03 | |
| Current value | ... | 33.09999847 | 33.09999847 | 33.09999847 | 33.29999924 | ... |

**Table 4 Column pressure of the hydraulic support**

| | | | | | | |
|---|---|---|---|---|---|---|
| Timestamp | ... | 2022-02-15 | 2022-02-15 | 2022-02-15 | 2022-02-15 | ... |
| | | 13:00:00 | 13:00:10 | 13:00:20 | 13:00:30 | |
| 1# pressure value | ... | 22.20000076 | 22.20000076 | 22.28999939 | 22.29999924 | ... |
| ... | ... | ... | ... | ... | ... | ... |
| 90# pressure value | ... | 14.10000038 | 14.10000038 | 14.10000038 | 14.10000038 | ... |
| ... | ... | ... | ... | ... | ... | ... |
| 183# pressure value | ... | 28.10000038 | 28.10000038 | 28.10000038 | 28.10000038 | ... |
| ... | ... | ... | ... | ... | ... | ... |

In addition, due to an adverse underground operation environment in a coal mine, sensor failures and calibration often occur, and raw sensor data read from the database is often incorrect or missing. Therefore, data needs to be cleansed through operations such as outlier removal and interpolation for missing data, to ensure data quality. For example, a specific operation includes: data cleansing 1: eliminating abnormal data that does not meet an actual case, for example, data with a gas concentration less than 0; and a data cleansing action 2: performing interpolation and resampling on various categories of data with different sampling rates and missing statuses, to keep sampling rates and timestamps consistent, for example, processing the data into data points at an interval of 15s, and obtaining a maximum value if there are a plurality of values in the interval, where if a specific category of data is missing beyond a specific time range (for example, greater than 1 hour), all of other categories of data within the time range are deleted, in other words, data within the time range is not used (in a training process). Example cleansed data is as follows:

**Table 5**

| Timestamp | Concentration value | Location | Current value | 1# pressure value | ... | 183# pressure value | ... |
|---|---|---|---|---|---|---|---|
| 2022-02-15 | 0.45 | 124.9998474 | 34.55333303 | 22.20000076 | ... | 28.10000038 | ... |
| 13:00:00 | | | | | | | |
| 2022-02-15 | 0.45 | 124.9998474 | 34.00000102 | 22.20000076 | ... | 28.10000038 | ... |
| 13:00:15 | | | | | | | |
| 2022-02-15 | 0.44 | 124.3999847 | 35.39333267 | 22.20000076 | ... | 28.10000038 | ... |
| 13:00:30 | | | | | | | |
| 2022-02-15 | 0.44 | 123.0003052 | 33.95999985 | 22.20000076 | ... | 28.10000038 | ... |
| 13:00:45 | | | | | | | |
| 2022-02-15 | 0.45 | 122.0005341 | 34.55333303 | 22.20000076 | ... | 28.10000038 | ... |
| 13:01:00 | | | | | | | |
| ... | ... | ... | ... | ... | ... | ... | ... |

During data layering, data may be grouped based on quality of various categories of data (whether large segments are often missing, and a missing ratio) and a degree of relevance (correlation) to a prediction target. The gas concentration data comes from the safety monitoring system, and is subject to mandatory requirements specified by policies. A sensor is well maintained, and the data has high quality and a highest correlation (autocorrelation) with the prediction target. Therefore, the data may be used as a highest-priority data set. Coal mining is one of main factors causing gas emission, and coal shearer-related data is highly correlated with the gas concentration. However, a sensor is prone to failures, leading to long-time missing of data. Therefore, the data may be used as a secondary-priority data set. Coal seam pressure is also one of factors affecting gas emission, and the column pressure of the hydraulic support is related to the coal seam pressure. However, a sensor has a high failure rate, and data is likely to be missing. Therefore, the data may be used as a secondary-priority data set. Data related to influencing factors of gas includes but is not limited to: a gas (methane) concentration (a plurality of sensors, for example, at an air intake lane, an air return lane, an operation face, and an air return corner), a wind speed, wind pressure, a wind direction, temperature, a location/speed of a coal shearer, an airborne gas concentration of the coal shearer, a variable-frequency output current/power of the coal shearer, a current/power of a cutting motor of the coal shearer, the column pressure of the hydraulic support, a jack stroke of the hydraulic support, a current/power of a motor of a scraper conveyor, an opening degree of a ventilation door/window, gas content of a coal seam, a mining advance, and a gas extraction amount of the coal seam.

Specifically, a missing ratio of each category of data may be evaluated first. For data with a fixed sampling rate (for example, the coal shearer or the hydraulic support), a missing ratio is equal to an amount of missing data/a total quantity of data points. For data with a non-fixed sampling rate (for example, the gas concentration), assuming that a data missing ratio in the last three months needs to be evaluated, a total data amount in the last year may be first counted to obtain an average data amount in three months as a total quantity of data points, and then the missing ratio is calculated. Data is layered mainly based on sorting of data missing ratios. A lower missing ratio indicates a higher priority. If missing ratios are close, correlations between the data and a prediction target are calculated (for example, by using a mutual information method), and the data is sorted based on the correlations. In this example, a data sorting and layering result is as follows: ① the gas concentration data (the gas concentration at the upper corner of the operation face), ② the coal shearer data (the location of the coal shearer and the cutting current of the coal shearer), and ③ the hydraulic support data (the column pressure of the hydraulic support).

Before the data is input to a model, the cleansed data may be used to construct various statistical features for an algorithm to use. For example, a maximum value, a minimum value, and an average value of data in every 5 minutes are extracted to separately form time series features.

For example, a specific operation may be: constructing features by using the cleansed data. The gas concentration data is classified into a short-term trend feature, a medium-term trend feature, and a long-term trend feature. The short-term trend feature is as follows: In a sliding window within a short time range (for example, 120s) in a negative direction of prediction starting time t0, maximum values within intervals and difference values between adjacent intervals are aggregated at a fixed time interval (for example, every 15s). The medium-term trend feature is as follows: In a sliding window within a medium time range (for example, 5 min) in the negative direction of t0, a maximum value, a minimum value, a range, and a mean are obtained. The long-term trend feature is as follows: In a sliding window within a long time range (for example, 8 h) in the negative direction of t0, a maximum value within an interval is obtained at a fixed time interval (for example, every 1 h). Example feature data is as follows:

**Table 6**

| Timestamp t0 | t0-15s Max | t0-30s Max | ... | t0-15s Diff | t0-30s Diff | ... | t0-5 min Max | t0-5 min Mean | t0-5 min Min | t0-5 min Max-Min | t0-1 h Max | ... |
|---|---|---|---|---|---|---|---|---|---|---|---|---|
| 2022-02-15 | 0.4 | 0.4 | ... | 0.0 | 0.0 | ... | 0.41 | 0.38949999999999 99 | 0.37 | 0.04 | 0.43 | ... |
| 16:00:00 | | | | | | | | | | | | |
| 2022-02-15 | 0.41 | 0.41 | ... | 0.01 | 0.0 | ... | 0.41 | 0.39149999999999 996 | 0.37 | 0.04 | 0.43 | ... |
| 16:00:15 | | | | | | | | | | | | |
| 2022-02-15 | 0.41 | 0.41 | ... | 0.0 | 0.01 | ... | 0.42 | 0.39399999999999 996 | 0.38 | 0.04 | 0.43 | ... |
| 16:00:30 | | | | | | | | | | | | |
| 2022-02-15 | 0.42 | 0.42 | ... | 0.01 | 0.0 | ... | 0.42 | 0.39599999999999 996 | 0.38 | 0.04 | 0.42 | ... |
| 16:00:45 | | | | | | | | | | | | |
| 2022-02-15 | 0.42 | 0.42 | ... | 0.0 | 0.01 | ... | 0.43 | 0.39849999999999 99 | 0.38 | 0.05 | 0.43 | ... |
| 16:01:00 | | | | | | | | | | | | |
| ... | ... | ... | ... | ... | ... | ... | ... | ... | ... | ... | ... | ... |

For a data feature of the location and the cutting current of the coal shearer, in a sliding window within a short time range (for example, 120s) in the negative direction of the prediction starting time t0, a mean within an interval is obtained at a fixed time interval (for example, every 15s). An example feature is as follows:

**Table 7**

| Timestamp t0 | t0-15s Location | t0-30s Location | ... | t0-15s Cutting current | t0-30s Cutting current | ... |
|---|---|---|---|---|---|---|
| 2022-02-15 | 58.001297 | 56.99874878 | ... | 34.38666687 | 34.04666672 | ... |
| 16:00:00 | | | | | | |
| 2022-02-15 | 59.00106812 | 58.001297 | ... | 34.55333303 | 34.38666687 | ... |
| 16:00:15 | | | | | | |
| 2022-02-15 | 60.00083923 | 59.00106812 | ... | 34.00000102 | 34.55333303 | ... |
| 16:00:30 | | | | | | |
| 2022-02-15 | 60.40074768 | 60.00083923 | ... | 35.39333267 | 34.00000102 | ... |
| 16:00:45 | | | | | | |
| 2022-02-15 | 61.20056458 | 60.40074768 | ... | 33.95999985 | 35.39333267 | ... |
| 16:01:00 | | | | | | |
| ... | ... | ... | ... | ... | ... | ... |

A data feature of the column pressure of the hydraulic support is a value at the prediction starting time t0. An example feature is as follows:

**Table 8**

| Timestamp t0 | 1# pressure value | ... | 183# pressure value | ... |
|---|---|---|---|---|
| 2022-02-15 16:00:00 | 22.20000076 | ... | 28.10000038 | ... |
| 2022-02-15 16:00:15 | 22.28999939 | ... | 28.10000038 | ... |
| 2022-02-15 16:00:30 | 22.29999924 | ... | 28.10000038 | ... |
| 2022-02-15 16:00:45 | 22.29999924 | ... | 28.10000038 | ... |
| 2022-02-15 16:01:00 | 22.29999924 | ... | 28.10000038 | ... |
| ... | ... | ... | ... | ... |

703: Send, to the device side, the first model obtained through training based on the first data, where the first model is the base model for time series prediction.

The first model may be the base model for time series prediction, and the first data may include time series data within a first time period and data collected at a target moment after the first time period. During training of the first model, the time series data within the first time period may be input to the first model, and the first model may obtain predicted data for the target moment, and use, as a ground-truth, the data, in the first data, that is collected at the target moment, to train the first model.

704: Send, to the device side, the second model obtained through training based on the second data, where the second model is used to predict data related to a prediction bias of the base model.

In this embodiment of this application, models (for example, the first model and the second model) corresponding to data at different layer may be machine learning algorithms, deep learning algorithms, or the like, for example, ridge regression or a neural network, or may be large models. Models at different layers may be different.

In a possible implementation, the first data and the second data include data collected in a same scenario within the first time period, and the first data further includes data collected at the target moment after the first time period.

During training of the second model, the second data may be used as an input for feed-forward of the second model before the training, and a ground-truth used for training the second model is constructed based on the first data and the first model. Because the second model needs to have a capability of predicting the data related to the prediction bias of the base model, the ground-truth may be the data related to the prediction bias of the base model.

The data related to the prediction bias herein may be a predicted residual, to be specific, a difference between a prediction result and a real value (or a value close to a real value), or a value that can be mapped to a predicted residual. The data related to the prediction bias may be data in a dimension that is the same as or different from a dimension of an output of the base model, or may be an abstract feature representation. This is not limited in this application.

During construction of the ground-truth used for training the second model, the predicted data for the target moment may be obtained by using the first model based on data, in the first data, that is collected within the first time period. A residual between the predicted data and the data, in the first data, that is collected at the target moment is used as a first ground-truth. The first ground-truth may be used as the ground-truth used for training the second model. Data, in the second data, that is collected within the first time period may be used as an input for feed-forward of the second model before the training. The second model is trained by using a difference between a prediction result of the second model and the first ground-truth.

It should be understood that, during feed-forward of the first model, an output result, whose difference from a corresponding ground-truth is greater than a threshold, of the first model may be selected. It can be considered that processing accuracy of the first model for this part of input data is low. Therefore, second data corresponding to this part of input data may be used as data for feed-forward of the second model. The "second data corresponding to this part of input data" may be understood as data aligned in time. For example, it can be determined, through threshold-based determining, that processing accuracy of the first model for the first data is low (a training sample for training the first model may include data other than the first data). Therefore, data within a time period that is the same as (or a time period that is close to) a time period to which the first data belongs may be selected from training data of the second model as an input for training the second model. To be specific, prediction for a prediction bias and corresponding model training are performed on this part of data for which the first model has low prediction accuracy. This can reduce training costs of the second model while ensuring training accuracy of the second model.

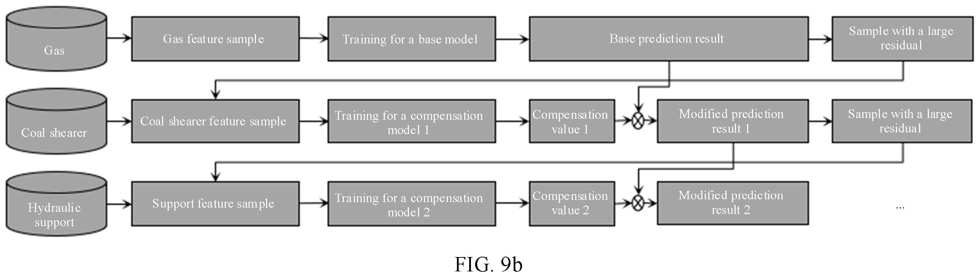

For example, as shown in FIG. 9b, the first data may be a sample with a large residual that is selected based on a base prediction result.

Similarly, a model for predicting data related to a prediction bias of the second model may be further trained. In a possible implementation, third data may be obtained, where the third data, the second data, and the first data are time series data of different categories that is collected in a same scenario; and a third model obtained through training based on the third data is sent to the device side, where the third model is used to predict the data related to the prediction bias of the second model.

In a possible implementation, the third model is used to predict a predicted residual of a predicted residual of the second model.

In a possible implementation, the first data, the second data, and the third data include data collected in a same scenario within the first time period, and the first data further includes data collected at the target moment after the first time period. A predicted residual for the first model may be obtained by using the second model based on the data, in the second data, that is collected within the first time period. A residual between the predicted residual and the first ground-truth is used as a second ground-truth, and training is performed based on data, in the third data, that is collected within the first time period, to obtain the third model.

Similarly, in addition to the second model, another model for predicting data related to a prediction bias of the first model may be further trained (a type of input data for the model is different from a type of the second data). During inference, a result obtained by the model and a result obtained by the second model may be fused (for example, weighted-averaged).

Similarly, in addition to the third model, another model for predicting the data related to the prediction bias of the second model may be further trained (a type of input data for the model is different from a type of the third data). During inference, a result obtained by the model and a result obtained by the third model may be fused (for example, weighted-averaged).

In a possible implementation, a feature constructed based on each data set obtained through division is used as an input for a model at each layer, and the model at each layer is independently trained. If a new data set is added after the training is completed, a layer of model may be created and trained. An output of each layer may be a prediction target. Alternatively, a 1^{st} layer outputs a base prediction result, and each of remaining layers outputs a residual between a prediction result and a target.

For example, a three-layer model for training may be constructed based on a data layering result, and corresponding inputs are gas data, coal shearer data, and hydraulic support data. A training sample for a 1^{st} layer includes a gas data feature and a maximum value of a gas concentration within a range of a sliding window (every 5 minutes) after a timestamp t0. An example is as follows:

**Table 9**

| Times tamp t0 | Data feature | | | | | | | | | | | | Label | |
|---|---|---|---|---|---|---|---|---|---|---|---|---|---|---|
| | t0-15s Location | t0-30s Location | ... | t0-15s Cutting current | t0-30s Cutting current | ... | t0-5 min Max | t0-5 min Mean | t0-5 min Min | t0-5 min Max -Min | t0-1 h Ma x | ... | 5 min Gas | 10 min Gas |
| 2022-02-15 16:00: 00 | 58.001297 | 56.99874878 | ... | 34.38666687 | 34.04666672 | ... | 0.41 | 0.3894999999999999 | 0.37 | 0.04 | 0.43 | ... | 0.46 | 0.49 |
| 2022-02-15 16:00: 15 | 59.00106812 | 58.001297 | ... | 34.55333303 | 34.38666687 | ... | 0.41 | 0.3914999999 9999996 | 0.37 | 0.04 | 0.43 | ... | 0.46 | 0.49 |

| t0-15s Location | t0-30s Location | ... | t0-15s Cutting current | t0-30s Cutting current | ... | t0-5 min Max | t0-5 min Mean | t0-5 min Min | t0-5 min Max -Min | t0-1 h Max | ... | 5 min Gas | 10 min Gas | |
|---|---|---|---|---|---|---|---|---|---|---|---|---|---|---|
| 2022-02-15 16:00: 30 | 60.00083923 | 59.00106812 | ... | 34.00000102 | 34.55333303 | ... | 0.42 | 0.3939999999 9999996 | 0.38 | 0.04 | 0.43 | ... | 0.46 | 0.49 |
| 2022-02-15 16:00: 45 | 60.40074768 | 60.00083923 | ... | 35.39333267 | 34.00000102 | ... | 0.42 | 0.3959999999 9999996 | 0.38 | 0.04 | 0.42 | ... | 0.46 | 0.49 |
| 2022-02-15 16:01: 00 | 61.20056458 | 60.40074768 | ... | 33.95999985 | 35.39333267 | ... | 0.43 | 0.3984999999999999 | 0.38 | 0.05 | 0.43 | ... | 0.46 | 0.49 |
| ... | ... | ... | ... | ... | ... | ... | ... | ... | ... | ... | ... | ... | ... | ... |

A base model at the 1^{st} layer is trained based on all gas data feature samples (normalized), and then residuals of the samples are counted. To ensure prediction effect for a high gas concentration, a sample with a low predicted value (for example, δ = -0.05, where 0 is not used, for the purpose of balanced sampling) is selected, a feature part is replaced with the coal shearer data, a label part is replaced with a corresponding residual, and an updated sample is used as a training sample for a compensation model 1. An example is as follows:

**Table 10**

| Timestamp t0 | Data feature | | | | | | Label | |
|---|---|---|---|---|---|---|---|---|
| | t0-15s Location | t0-30s Location | ... | t0-15s Cutting current | t0-30s Cutting current | ... | 5 min Gas | 10 min Gas |
| 2022-02-15 16:00:00 | 58.001297 | 56.99874878 | ... | 34.38666687 | 34.04666672 | ... | -0.01 | 0.08 |
| 2022-02-15 | 59.00106 | 58.00129 | ... | 34.553333 | 34.38666 | ... | -0.01 | 0.08 |
| 16:00:15 | 812 | 7 | | 03 | 687 | | | |
| 2022-02-15 16:00:30 | 60.00083923 | 59.00106812 | ... | 34.00000102 | 34.55333303 | ... | -0.01 | 0.08 |
| 2022-02-15 16:00:45 | 60.40074768 | 60.00083923 | ... | 35.39333267 | 34.00000102 | ... | -0.01 | 0.08 |
| 2022-02-15 16:01:00 | 61.20056458 | 60.40074768 | ... | 33.95999985 | 35.39333267 | ... | -0.06 | 0.02 |
| ... | ... | ... | ... | ... | ... | ... | ... | ... |

The foregoing process is repeated to select a sample with a low predicted value, a feature part is replaced with the hydraulic support data, a residual is updated, and an updated sample is used as a training sample for a compensation model 2. An example is as follows:

**Table 11**

| Timestamp t0 | Data feature | | | | Label | |
|---|---|---|---|---|---|---|
| | 1# pressure value | ... | 183# pressure value | ... | 5 min Gas | 10 min Gas |
| 2022-02-15 16:00:00 | 22.20000076 | ... | 28.10000038 | ... | 0.00 | 0.00 |
| 2022-02-15 16:00:15 | 22.28999939 | ... | 28.10000038 | ... | 0.00 | 0.03 |
| 2022-02-15 16:00:30 | 22.29999924 | ... | 28.10000038 | ... | 0.00 | 0.07 |
| 2022-02-15 16:00:45 | 22.29999924 | ... | 28.10000038 | ... | -0.02 | 0.06 |
| 2022-02-15 16:01:00 | 22.29999924 | ... | 28.10000038 | ... | -0.01 | 0.01 |
| ... | ... | ... | ... | ... | ... | ... |

In the foregoing manner, for signal data at different layers, prediction models are constructed and trained in a hierarchical manner by using residual samples and a compensation value mechanism, and prediction results of all layers are fused to obtain an overall prediction result.

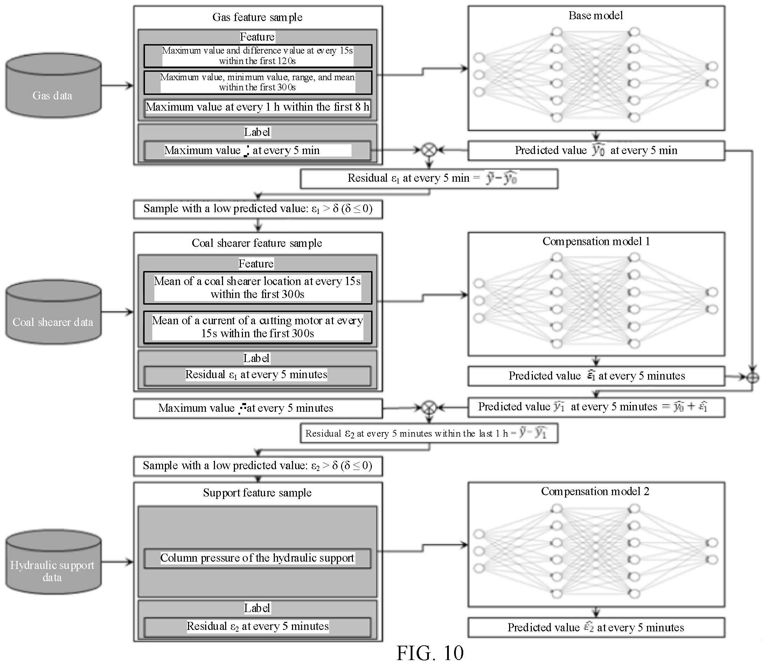

FIG. 10 is a diagram of hierarchical construction and training. When a new data type, for example, gas extraction data, is added, only a layer of model needs to be added, and a gas extraction data feature and a new residual construction sample are used for training, without adjusting a previous model.

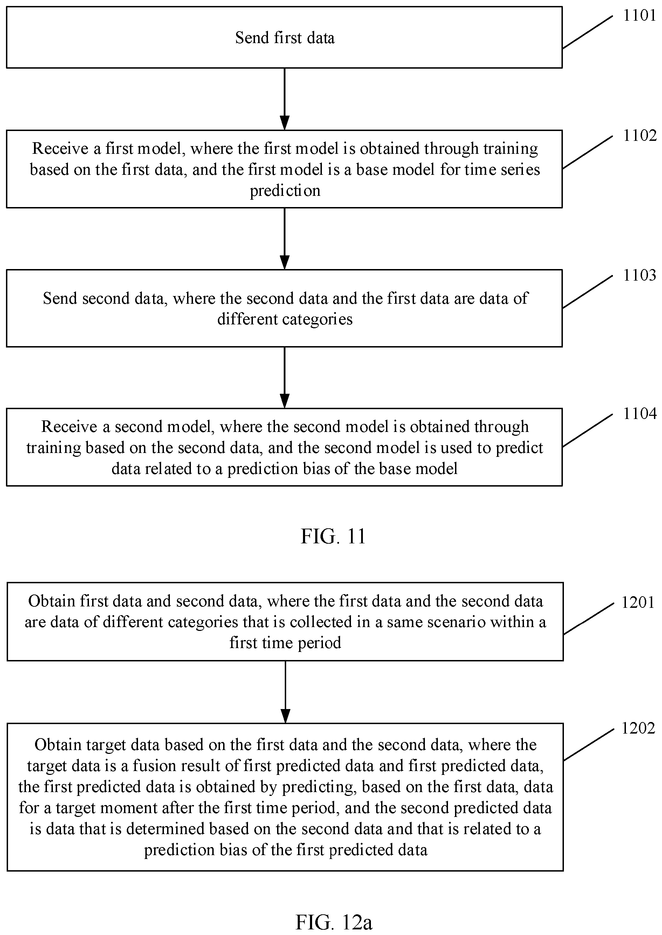

In addition, corresponding to the embodiment in FIG. 7, from a perspective of a device side, an embodiment of this application further provides a data processing method. As shown in FIG. 11, the method includes the following steps.

1101: Sending first data.

1102: Receive a first model, where the first model is obtained through training based on the first data, and the first model is a base model for time series prediction.

1103: Send second data, where the second data and the first data are data of different categories.

1104: Receive second model, where the second model is obtained through training based on the second data, and the second model is used to predict data related to a prediction bias of the base model.

In a possible implementation, the second model is used to perform residual prediction on the base model.

In a possible implementation, the first data and the second data include time series data within a same time period.

In a possible implementation, third data may be further sent, where the third data, the second data, and the first data are time series data of different categories that is collected in a same scenario; and a third model is received, where the third model is obtained through training based on the third data, and the third model is used to predict data related to a prediction bias of the second model.

In a possible implementation, the third model is used to predict a predicted residual of a predicted residual of the second model.

In a possible implementation, the first data is sensor data of a first category, and the second data is sensor data of a second category. A possibility of data missing during collection of the sensor data of the first category is lower than a possibility of data missing during collection of the sensor data of the second category. Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, indication information may be further sent, where the indication information indicates that the first data is used as a training sample for the base model for time series prediction.

In a possible implementation, the first data and the second data are sensor data related to a hazardous substance in a resource collection scenario.

The foregoing describes embodiments of this application from a perspective of model training. The following describes a data processing method provided in this application from a perspective of model inference. The following describes in detail a model training method in embodiments of this application with reference to the accompanying drawings.

FIG. 12a is a schematic flowchart of a data processing method according to an embodiment of this application. As shown in FIG. 12a, the data processing method provided in this embodiment of this application may include steps 1201 and 1202. The following separately describes these steps in detail.

1201: Obtain first data and second data, where the first data and the second data are data of different categories that is collected in a same scenario within a first time period.

In a possible implementation, the first data and the second data are time series data.

In a possible implementation, the first data and the second data are sensor data related to a hazardous substance in a resource collection scenario.

In a possible implementation, the first data is sensor data of a first category, and the second data is sensor data of a second category. A possibility of data missing during collection of the sensor data of the first category is lower than a possibility of data missing during collection of the sensor data of the second category. Alternatively, the first model is used to predict sensor data of a third category based on the sensor data of the first category, where a correlation between the sensor data of the first category and the sensor data of the third category is higher than a correlation between the sensor data of the second category and the sensor data of the third category.

1202: Obtain target data based on the first data and the second data, where the target data is a fusion result of first predicted data and second predicted data, the first predicted data is obtained by predicting, based on the first data, data for a target moment after the first time period, and the second predicted data is data that is determined based on the second data and that is related to a prediction bias of the first predicted data.

In a possible implementation, the second predicted data is a predicted residual, determined based on the second data, of the first predicted data.

In a possible implementation, predicted data for the target moment after the first time period may be obtained based on the first data, the second predicted data is obtained based on the second data, and the target data is determined based on the fusion result of the first predicted data and the second predicted data.

When the second predicted data is the predicted residual, determined based on the second data, of the first predicted data, a summation operation may be performed on the first predicted data and the second predicted data to obtain the fusion result.

In a possible implementation, the first data and the second data may be sent to a server. The server may obtain, based on the first data, predicted data for the target moment after the first time period, obtain the second predicted data based on the second data, determine the target data based on the fusion result of the first predicted data and the second predicted data, and send the target data to a device side. Correspondingly, the device side may receive the target data sent by the server.

In a possible implementation, third data may be further obtained, where the third data, the second data, and the first data are time series data of different categories that is collected in a same scenario; and the target data may be obtained based on the first data, the second data, and the third data, where the target data is a fusion result of the first predicted data, the second predicted data, and third predicted data.

In a possible implementation, the third predicted data is data that is determined based on the third data and that is related to a prediction bias of the second predicted data. Further, during fusion, the first predicted data, the second predicted data, and the third predicted data may be fused.

In a possible implementation, the third predicted data is data that is determined based on the third data and that is related to the prediction bias of the first predicted data. Further, during fusion, the second predicted data and the third predicted data may be fused to obtain a fusion prediction bias for the first predicted data, and the first predicted data and the fusion prediction bias for the first predicted data may be fused.

In a possible implementation, the third predicted data is a predicted residual, determined based on the third data, of the first predicted data or the second predicted data.

In a possible implementation, the first predicted data is obtained by predicting, based on the first data by using the first model, data for the target moment after the first time period, and the second predicted data is data that is determined based on the second data by using a second model and that is related to the prediction bias of the first predicted data.

For descriptions of the first model and the second model, refer to the foregoing embodiments. Similar parts are not described again.

In a possible implementation, before the first data and the second data are obtained, fourth data and fifth data may be further obtained, where the fourth data and the first data are data of a same category, the fifth data and the second data are data of a same category, the first model is obtained through training based on the fourth data, and the second model is obtained through training based on the fifth data. That is, the first model may be obtained through training based on the fourth data, and the second model may be obtained through training based on the fifth data.

In this embodiment of this application, after trained models at all layers are deployed, needed feature data is separately provided for the models as inputs, and the models separately perform prediction. Results of all the layers are fused, and a fusion result is used as a final prediction result. If data at a specific layer is missing, the layer does not participate in the fusion. If all the layers output prediction targets, a fusion method may be: weighted-averaging the outputs of all the layers. If a 1^{st} layer outputs a base prediction result and each of remaining layers outputs a residual, a fusion method is linear superposition.

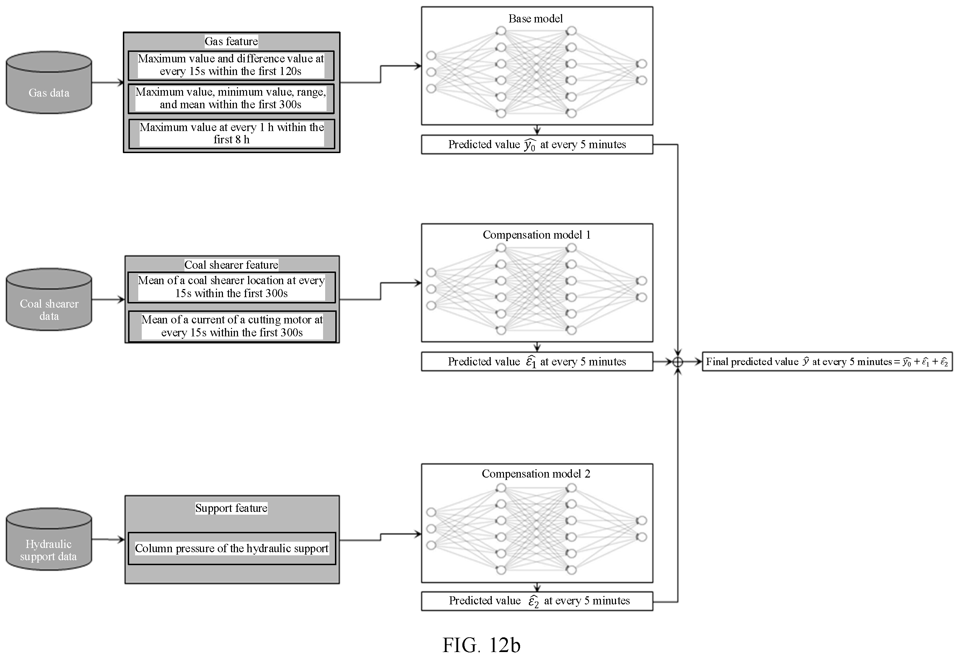

For example, FIG. 12b is a diagram of an architecture of model inference. If a sensor fails and corresponding data is missing, for example, a coal shearer location sensor fails for a long time, a compensation model 1 does not output a result, and a final predicted value of a concentration is an output of a base model and an output of a compensation model 2. During inference, models at all layers independently perform prediction. If data at a specific layer is missing, a model at the layer is disabled.

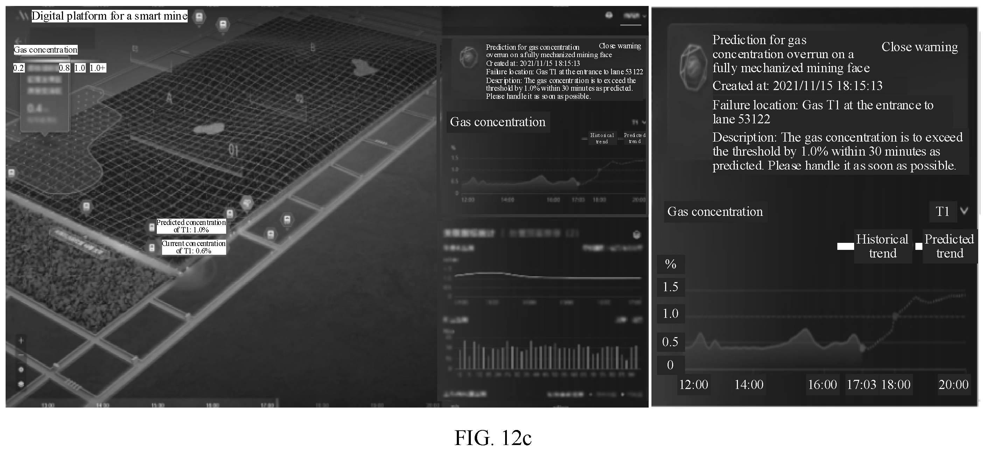

After target data is obtained, a user may be warned based on the target data. For example, the user is warned based on a numerical relationship between the target data and a danger threshold. FIG. 12c is a frontend interface displayed to a user. The system may predict a curve of gas concentrations within future X minutes, determine, based on a specified threshold, a future moment at which a gas concentration is to exceed the threshold, and display warning information in an upper window.

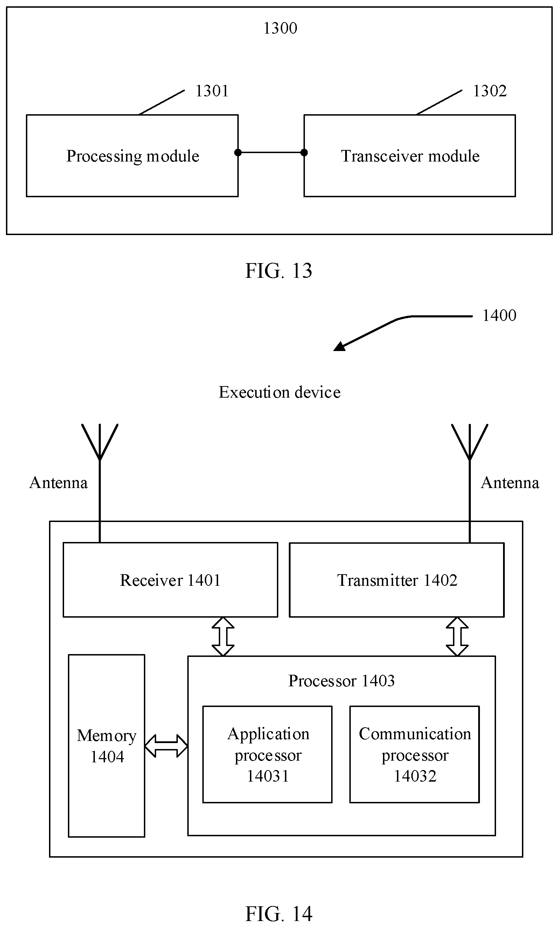

FIG. 13 is a diagram of a structure of a data processing apparatus according to an embodiment of this application. As shown in FIG. 13, the data processing apparatus 1300 provided in this embodiment of this application includes:
a processing module 1301, configured to: obtain first data; and obtain second data, where the second data and the first data are data of different categories, where
for specific descriptions of the processing module 1301, refer to the descriptions of steps 701 and 702 in the foregoing embodiments, and similar parts are not described herein again; and
a transceiver module 1302, configured to send, to a device side, a second model obtained through training based on the second data, where the second model is used to predict data related to a prediction bias of a base model, where
for specific descriptions of the transceiver module 1302, refer to the descriptions of steps 703 and 704 in the foregoing embodiments, and similar parts are not described herein again.

In a possible implementation, the second model is used to perform residual prediction on the base model.

In a possible implementation, the first data and the second data include time series data within a same time period.

In a possible implementation, the first data and the second data include data collected in a same scenario within a first time period, and the first data further includes data collected at a target moment after the first time period.

Before sending, to the device side, the second model obtained through training based on the second data, the processing module is further configured to:
obtain, by using a first model, predicted data for the target moment based on data, in the first data, that is collected within the first time period; and
use, as a first ground-truth, a residual between the predicted data and the data, in the first data, that is collected at the target moment, and perform training based on data, in the second data, that is collected within the first time period, to obtain the second model.

In a possible implementation, the processing module is further configured to:
obtain third data, where the third data, the second data, and the first data are time series data of different categories that is collected in a same scenario; and
the transceiver module is further configured to send, to the device side, a third model obtained through training based on the third data, where the third model is used to predict data related to a prediction bias of the second model.

In a possible implementation, the third model is used to predict a predicted residual of a predicted residual of the second model.

In a possible implementation, the first data, the second data, and the third data include data collected in a same scenario within the first time period, and the first data further includes data collected at the target moment after the first time period; and
the processing module is further configured to: before sending, to the device side, the third model obtained through training based on the third data, obtain, by using the second model, a predicted residual for the first model based on data, in the second data, that is collected within the first time period; and
use a residual between the predicted residual and the first ground-truth as a second ground-truth, and perform training based on data, in the third data, that is collected within the first time period, to obtain the third model.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the first data and the second data are sensor data related to a hazardous substance in a resource collection scenario.

In addition, an embodiment of this application provides a data processing apparatus, and the apparatus includes:
a transceiver module, configured to: send first data;
receive a first model, where the first model is obtained through training based on the first data, and the first model is a base model for time series prediction;
send second data, where the second data and the first data are data of different categories; and
receive a second model, where the second model is obtained through training based on the second data, and the second model is used to predict data related to a prediction bias of the base model.

In a possible implementation, the second model is used to perform residual prediction on the base model.

In a possible implementation, the first data and the second data include time series data within a same time period.

In a possible implementation, the transceiver module is further configured to:
send third data, where the third data, the second data, and the first data are time series data of different categories that is collected in a same scenario; and
receive a third model, where the third model is obtained through training based on the third data, and the third model is used to predict data related to a prediction bias of the second model.

In a possible implementation, the third model is used to predict a predicted residual of a predicted residual of the second model.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the transceiver module is further configured to:
send indication information, where the indication information indicates that the first data is used as a training sample for the base model for time series prediction.

In a possible implementation, the first data and the second data are sensor data related to a hazardous substance in a resource collection scenario.

In addition, an embodiment of this application further provides a data processing apparatus, and the apparatus includes:
a processing module, configured to: obtain first data and second data, where the first data and the second data are data of different categories that is collected in a same scenario within a first time period; and
obtain target data based on the first data and the second data, where the target data is a fusion result of first predicted data and second predicted data, the first predicted data is obtained by predicting, based on the first data, data for a target moment after the first time period, and the second predicted data is data that is determined based on the second data and that is related to a prediction bias of the first predicted data.

In a possible implementation, the second predicted data is a predicted residual, determined based on the second data, of the first predicted data.

In a possible implementation, the first data and the second data are time series data.

In a possible implementation, the processing module is specifically configured to:
obtain, based on the first data, predicted data for the target moment after the first time period;
obtain the second predicted data based on the second data; and
determine the target data based on the fusion result of the first predicted data and the second predicted data.

In a possible implementation, the processing module is specifically configured to:
send the first data and the second data to a server, and receive the target data from the server.

In a possible implementation, the first data is sensor data of a first category, and the second data is sensor data of a second category.

A possibility of data missing during collection of the sensor data of the first category is lower than a possibility of data missing during collection of the sensor data of the second category.

Alternatively, the first model is used to predict sensor data of a third category based on the sensor data of the first category, where a correlation between the sensor data of the first category and the sensor data of the third category is higher than a correlation between the sensor data of the second category and the sensor data of the third category.

In a possible implementation, the processing module is further configured to:
obtain third data, where the third data, the second data, and the first data are time series data of different categories that is collected in a same scenario; and
the processing module is specifically configured to:
   obtain the target data based on the first data, the second data, and the third data, where the target data is a fusion result of the first predicted data, the second predicted data, and third predicted data, and the third predicted data is data that is determined based on the third data and that is related to a prediction bias of the second predicted data, or the third predicted data is data that is determined based on the third data and that is related to the prediction bias of the first predicted data.

In a possible implementation, the third predicted data is a predicted residual, determined based on the third data, of the first predicted data or the second predicted data.

In a possible implementation, the first predicted data is obtained by predicting, based on the first data by using the first model, data for the target moment after the first time period, and the second predicted data is data that is determined based on the second data by using a second model and that is related to the prediction bias of the first predicted data.

In a possible implementation, the processing module is further configured to: before obtaining the first data and the second data, obtain or send, to a server, fourth data and fifth data, where the fourth data and the first data are data of a same category, the fifth data and the second data are data of a same category, the first model is obtained through training based on the fourth data, and the second model is obtained through training based on the fifth data.

In a possible implementation, the first data and the second data are sensor data related to a hazardous substance in a resource collection scenario.

The following describes an execution device provided in embodiments of this application. FIG. 14 is a diagram of a structure of an execution device according to an embodiment of this application. The execution device 1400 may be specifically a virtual reality VR device, a mobile phone, a tablet computer, a notebook computer, an intelligent wearable device, a monitoring data processing device, a server, or the like. This is not limited herein. Specifically, the execution device 1400 includes a receiver 1401, a transmitter 1402, a processor 1403 (there may be one or more processors 1403 in the execution device 1400, and one processor is used as an example in FIG. 14), and a memory 1404. The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores processor and operation instructions, an executable module, or a data structure, or a subset thereof, or an extended set thereof. The operation instructions may include various operation instructions for implementing various operations.

The processor 1403 controls an operation of the execution device. During specific application, the components of the execution device are coupled together through a bus system. In addition to a data bus, the bus system may further include a power bus, a control bus, a status signal bus, and the like. However, for clarity of description, various buses are marked as the bus system in the figure.

The methods disclosed in the foregoing embodiments of this application may be applied to the processor 1403 or implemented by the processor 1403. The processor 1403 may be an integrated circuit chip and has a signal processing capability. During implementation, the steps of the foregoing methods may be performed by a hardware integrated logic circuit in the processor 1403 or by using instructions in a form of software. The processor 1403 may be a general-purpose processor, a digital signal processor (digital signal processor, DSP), a microprocessor, or a microcontroller. The processor 1403 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1403 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1404, and the processor 1403 reads information in the memory 1404 and performs the steps related to the model inference process in the foregoing methods in combination with hardware of the processor 1403.

The receiver 1401 may be configured to receive input digit or character information, and generate a signal input related to a related setting and function control of the execution device. The transmitter 1402 may be configured to output digit or character information through a first interface. The transmitter 1402 may be further configured to send instructions to a disk group through the first interface, to modify data in the disk group. The transmitter 1402 may further include a display device, for example, a display.

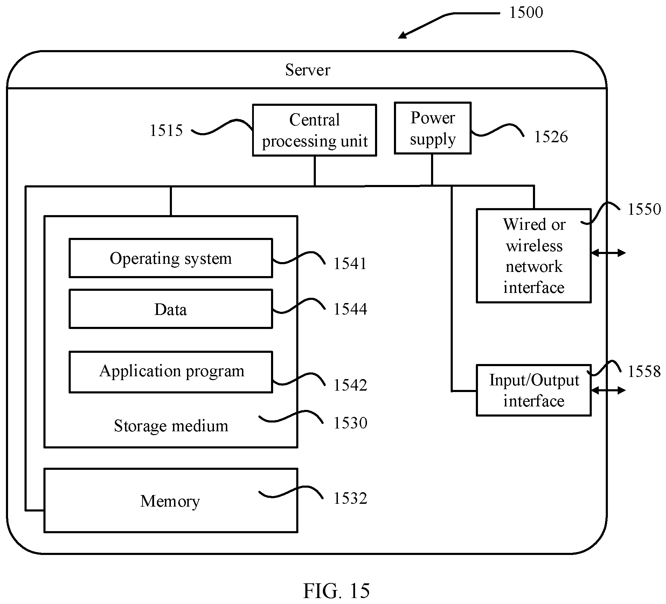

An embodiment of this application further provides a server. FIG. 15 is a diagram of a structure of a server according to an embodiment of this application. Specifically, the server 1500 is implemented by one or more servers. The server 1500 may vary greatly due to different configurations or performance, and may include one or more central processing units (central processing units, CPU) 1515 (for example, one or more processors), a memory 1532, and one or more storage media 1530 (for example, one or more mass storage devices) for storing an application program 1542 or data 1544. The memory 1532 and the storage medium 1530 may perform transient storage or persistent storage. The program stored in the storage medium 1530 may include one or more modules (not shown in the figure), and each module may include a series of instruction operations for the server. Further, the central processing unit 1515 may be configured to communicate with the storage medium 1530, and perform, on the server 1500, a series of instruction operations in the storage medium 1530.

The server 1500 may further include one or more power supplies 1526, one or more wired or wireless network interfaces 1550, one or more input/output interfaces 1558, or one or more operating systems 1541, for example, Windows Server^{™}, Mac OS X^{™}, Unix^{™}, Linux^{™}, or FreeBSD^{™}.

In this embodiment of this application, the central processing unit 1515 is configured to perform the data processing method in the foregoing embodiments.

An embodiment of this application further provides a computer program product. When the computer program product is run on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in an execution device to perform the data processing method described in the foregoing embodiments, or enable a chip in a training device to perform the data processing method described in the foregoing embodiments. Optionally, the storage unit is a storage unit in the chip, for example, a register or a buffer. Alternatively, the storage unit may be a storage unit in a radio access device but outside the chip, for example, a read-only memory (read-only memory, ROM), another type of static storage device that can store static information and instructions, or a random access memory (random access memory, RAM).

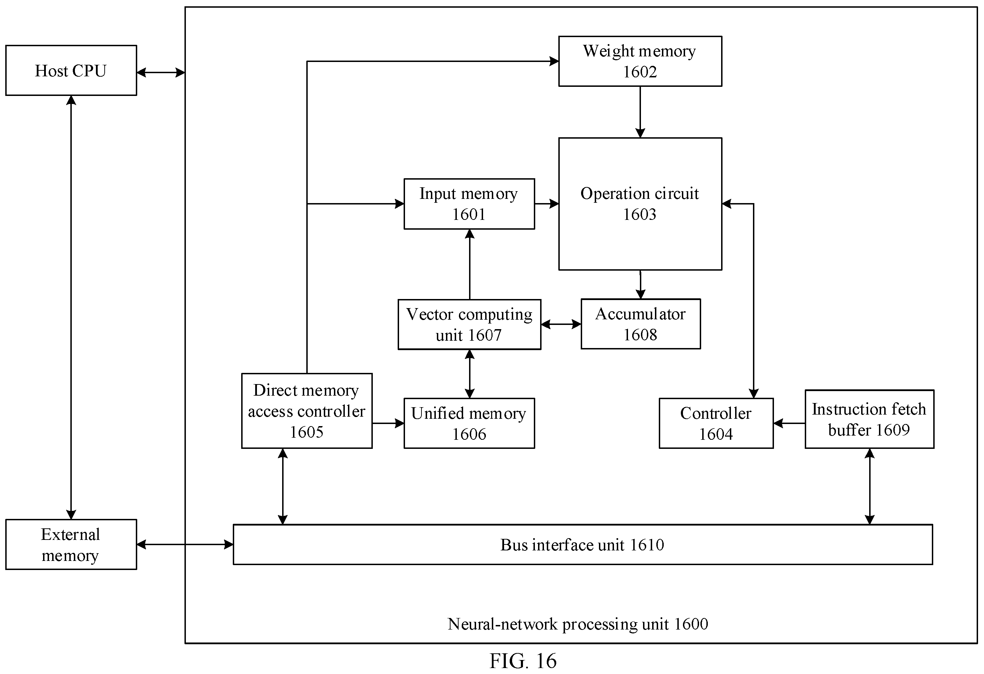

Specifically, FIG. 16 is a diagram of a structure of a chip according to an embodiment of this application. The chip may be represented by a neural-network processing unit NPU 1600. The NPU 1600 is mounted to a host CPU (Host CPU) as a coprocessor, and the host CPU assigns a task. A core part of the NPU is an operation circuit 1603. A controller 1604 controls the operation circuit 1603 to extract matrix data in a memory and perform a multiplication operation.

In some implementations, the operation circuit 1603 includes a plurality of process engines (Process Engine, PE). In some implementations, the operation circuit 1603 is a two-dimensional systolic array. The operation circuit 1603 may alternatively be a one-dimensional systolic array or another electronic circuit capable of performing mathematical operations such as multiplication and addition. In some implementations, the operation circuit 1603 is a general-purpose matrix processor.

For example, it is assumed that there is an input matrix A, a weight matrix B, and an output matrix C. The operation circuit fetches, from a weight memory 1602, data corresponding to the matrix B, and caches the data in each PE in the operation circuit. The operation circuit fetches data of the matrix A from an input memory 1601 to perform a matrix operation on the matrix B, and stores an obtained partial result or an obtained final result of the matrix in an accumulator (accumulator) 1608.

A unified memory 1606 is configured to store input data and output data. Weight data is directly transferred to the weight memory 1602 through a direct memory access controller (Direct Memory Access Controller, DMAC) 1605. Input data is also transferred to the unified memory 1606 through the DMAC.

A BIU is a bus interface unit, namely, a bus interface unit 1610, and is used for interaction between an AXI bus, and the DMAC and an instruction fetch buffer (Instruction Fetch Buffer, IFB) 1609.

The bus interface unit (Bus Interface Unit, BIU for short) 1610 is used for the instruction fetch buffer 1609 to obtain instructions from an external memory, and is further used for the direct memory access controller 1605 to obtain raw data of the input matrix A or the weight matrix B from the external memory.

The DMAC is mainly configured to transfer input data in the external memory DDR to the unified memory 1606, transfer weight data to the weight memory 1602, or transfer input data to the input memory 1601.

A vector computing unit 1607 includes a plurality of operation processing units, and if needed, performs further processing, for example, vector multiplication, vector addition, an exponential operation, a logarithmic operation, or magnitude comparison, on an output of the operation circuit 1603. The vector computing unit is mainly used for network computing, for example, batch normalization (batch normalization), pixel-level summation, or upsampling on a feature plane, at a non-convolutional/fully connected layer of a neural network.

In some implementations, the vector computing unit 1607 can store a processed output vector in the unified memory 1606. For example, the vector computing unit 1607 may apply a linear function or a nonlinear function to the output of the operation circuit 1603, for example, perform linear interpolation on a feature plane extracted at a convolutional layer. For another example, the vector computing unit 1607 may apply a linear function or a nonlinear function to a vector of an accumulated value, to generate an activation value. In some implementations, the vector computing unit 1607 generates a normalized value, a pixel-level summation value, or both a normalized value and a pixel-level summation value. In some implementations, the processed output vector can be used as an activation input for the operation circuit 1603, for example, used at a subsequent layer in the neural network.

The instruction fetch buffer (instruction fetch buffer) 1609 connected to the controller 1604 is configured to store instructions to be used by the controller 1604.

All of the unified memory 1606, the input memory 1601, the weight memory 1602, and the instruction fetch buffer 1609 are on-chip memories. The external memory is private for a hardware architecture of the NPU.

Any one of the processors mentioned above may be a general-purpose central processing unit, a microprocessor, an ASIC, or one or more integrated circuits for controlling execution of the foregoing programs.

In addition, it should be noted that the described apparatus embodiments are merely examples. The units described as separate parts may or may not be physically separated, and parts shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal cables.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware. In addition, a specific hardware structure used to implement a same function may be in various forms, for example, in a form of an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a training device, a network device, or the like) to perform all or some of methods in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored on a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk, SSD)), or the like.

## Claims

1. A data processing method, wherein the method comprises:
obtaining first data; and
sending, to a device side, a first model obtained through training based on the first data, wherein the first model is a base model for time series prediction;
obtaining second data, wherein the second data and the first data are data of different categories; and
sending, to the device side, a second model obtained through training based on the second data, wherein the second model is used to predict data related to a prediction bias of the base model.

2. The method according to claim 1, wherein the second model is used to perform residual prediction on the base model.

3. The method according to claim 1 or 2, wherein the first data and the second data comprise time series data within a same time period.

4. The method according to any one of claims 1 to 3, wherein the first data and the second data comprise data collected in a same scenario within a first time period, and the first data further comprises data collected at a target moment after the first time period; and
before sending, to the device side, the second model obtained through training based on the second data, the method further comprises:
obtaining, by using the first model, predicted data for the target moment based on data, in the first data, that is collected within the first time period; and
using, as a first ground-truth, a residual between the predicted data and the data, in the first data, that is collected at the target moment, and performing training based on data, in the second data, that is collected within the first time period, to obtain the second model.

5. The method according to claim 4, wherein obtaining the second model through training based on the data, in the second data, that is collected within the first time period comprises:
when the first ground-truth is greater than a threshold, performing training based on the data, in the second data, that is collected within the first time period, to obtain the second model.

6. The method according to any one of claims 1 to 5, wherein the method further comprises:
obtaining third data, wherein the third data, the second data, and the first data are time series data of different categories that is collected in a same scenario; and
sending, to the device side, a third model obtained through training based on the third data, wherein the third model is used to predict data related to a prediction bias of the second model.

7. The method according to claim 6, wherein the third model is used to predict a predicted residual of a predicted residual of the second model.

8. The method according to claim 6 or 7, wherein the first data, the second data, and the third data comprise data collected in a same scenario within the first time period, and the first data further comprises data collected at the target moment after the first time period; and
before sending, to the device side, the third model obtained through training based on the third data, the method further comprises:
obtaining, by using the second model, a predicted residual for the first model based on data, in the second data, that is collected within the first time period; and
using a residual between the predicted residual and the first ground-truth as a second ground-truth, and performing training based on data, in the third data, that is collected within the first time period, to obtain the third model.

9. The method according to any one of claims 1 to 8, wherein the first data is sensor data of a first category, and the second data is sensor data of a second category, wherein
a possibility of data missing during collection of the sensor data of the first category is lower than a possibility of data missing during collection of the sensor data of the second category; or
the first model is used to predict sensor data of a third category based on the sensor data of the first category, wherein a correlation between the sensor data of the first category and the sensor data of the third category is higher than a correlation between the sensor data of the second category and the sensor data of the third category.

10. The method according to any one of claims 1 to 9, wherein the method further comprises:
receiving indication information sent by the device side, wherein
the indication information indicates that the first data is used as a training sample for the base model for time series prediction.

11. The method according to any one of claims 1 to 10, wherein the first data and the second data are sensor data related to a hazardous substance in a resource collection scenario.

12. A data processing method, wherein the method comprises:
sending first data;
receiving a first model, wherein the first model is obtained through training based on the first data, and the first model is a base model for time series prediction;
sending second data, wherein the second data and the first data are data of different categories; and
receiving a second model, wherein the second model is obtained through training based on the second data, and the second model is used to predict data related to a prediction bias of the base model.

13. The method according to claim 12, wherein the second model is used to perform residual prediction on the base model.

14. The method according to claim 12 or 13, wherein the first data and the second data comprise time series data within a same time period.

15. The method according to any one of claims 12 to 14, wherein the method further comprises:
sending third data, wherein the third data, the second data, and the first data are time series data of different categories that is collected in a same scenario; and
receiving a third model, wherein the third model is obtained through training based on the third data, and the third model is used to predict data related to a prediction bias of the second model.

16. The method according to claim 15, wherein the third model is used to predict a predicted residual of a predicted residual of the second model.

17. The method according to any one of claims 12 to 16, wherein the first data is sensor data of a first category, and the second data is sensor data of a second category, wherein
a possibility of data missing during collection of the sensor data of the first category is lower than a possibility of data missing during collection of the sensor data of the second category; or
the first model is used to predict sensor data of a third category based on the sensor data of the first category, wherein a correlation between the sensor data of the first category and the sensor data of the third category is higher than a correlation between the sensor data of the second category and the sensor data of the third category.

18. The method according to any one of claims 12 to 17, wherein the method further comprises:
sending indication information, wherein the indication information indicates that the first data is used as a training sample for the base model for time series prediction.

19. The method according to any one of claims 12 to 18, wherein the first data and the second data are sensor data related to a hazardous substance in a resource collection scenario.

20. A data processing method, wherein the method comprises:
obtaining first data and second data, wherein the first data and the second data are data of different categories that is collected in a same scenario within a first time period; and
obtaining target data based on the first data and the second data, wherein the target data is a fusion result of first predicted data and second predicted data, the first predicted data is obtained by predicting, based on the first data, data for a target moment after the first time period, and the second predicted data is data that is determined based on the second data and that is related to a prediction bias of the first predicted data.

21. The method according to claim 20, wherein the second predicted data is a predicted residual, determined based on the second data, of the first predicted data.

22. The method according to claim 20 or 21, wherein the first data and the second data are time series data.

23. The method according to any one of claims 20 to 22, wherein obtaining the target data based on the first data and the second data comprises:
obtaining, based on the first data, predicted data for the target moment after the first time period;
obtaining the second predicted data based on the second data; and
determining the target data based on the fusion result of the first predicted data and the second predicted data.

24. The method according to any one of claims 20 to 23, wherein obtaining the target data based on the first data and the second data comprises:
sending the first data and the second data to a server, and receiving the target data from the server.

25. The method according to any one of claims 20 to 24, wherein the first data is sensor data of a first category, and the second data is sensor data of a second category, wherein
a possibility of data missing during collection of the sensor data of the first category is lower than a possibility of data missing during collection of the sensor data of the second category; or
the first model is used to predict sensor data of a third category based on the sensor data of the first category, wherein a correlation between the sensor data of the first category and the sensor data of the third category is higher than a correlation between the sensor data of the second category and the sensor data of the third category.

26. The method according to any one of claims 20 to 25, wherein the method further comprises:
obtaining third data, wherein the third data, the second data, and the first data are time series data of different categories that is collected in a same scenario; and
obtaining the target data based on the first data and the second data comprises:
obtaining the target data based on the first data, the second data, and the third data, wherein the target data is a fusion result of the first predicted data, the second predicted data, and third predicted data, and the third predicted data is data that is determined based on the third data and that is related to a prediction bias of the second predicted data, or the third predicted data is data that is determined based on the third data and that is related to the prediction bias of the first predicted data.

27. The method according to claim 26, wherein the third predicted data is a predicted residual, determined based on the third data, of the first predicted data or the second predicted data.

28. The method according to any one of claims 20 to 27, wherein the first predicted data is obtained by predicting, based on the first data by using the first model, data for the target moment after the first time period, and the second predicted data is data that is determined based on the second data by using a second model and that is related to the prediction bias of the first predicted data.

29. The method according to claim 28, wherein before obtaining the first data and the second data, the method further comprises:
obtaining or sending, to a server, fourth data and fifth data, wherein the fourth data and the first data are data of a same category, the fifth data and the second data are data of a same category, the first model is obtained through training based on the fourth data, and the second model is obtained through training based on the fifth data.

30. The method according to any one of claims 20 to 29, wherein the first data and the second data are sensor data related to a hazardous substance in a resource collection scenario.

31. A data processing apparatus, wherein the apparatus comprises:
a processing module, configured to: obtain first data; and obtain second data, wherein the second data and the first data are data of different categories; and
a transceiver module, configured to: send, to a device side, a first model obtained through training based on the first data, wherein the first model is a base model for time series prediction; and send, to the device side, a second model obtained through training based on the second data, wherein the second model is used to predict data related to a prediction bias of the base model.

32. The apparatus according to claim 31, wherein the second model is used to perform residual prediction on the base model.

33. The apparatus according to claim 31 or 32, wherein the first data and the second data comprise time series data within a same time period.

34. The apparatus according to any one of claims 31 to 33, wherein the first data and the second data comprise data collected in a same scenario within a first time period, and the first data further comprises data collected at a target moment after the first time period; and
before sending, to the device side, the second model obtained through training based on the second data, the processing module is further configured to:
obtain, by using the first model, predicted data for the target moment based on data, in the first data, that is collected within the first time period; and
use, as a first ground-truth, a residual between the predicted data and the data, in the first data, that is collected at the target moment, and perform training based on data, in the second data, that is collected within the first time period, to obtain the second model.

35. A data processing apparatus, wherein the apparatus comprises:
a transceiver module, configured to: send first data; receive a first model, wherein the first model is obtained through training based on the first data, and the first model is a base model for time series prediction; send second data, wherein the second data and the first data are data of different categories; and receive a second model, wherein the second model is obtained through training based on the second data, and the second model is used to predict data related to a prediction bias of the base model.

36. A data processing apparatus, wherein the apparatus comprises:
a processing module, configured to: obtain first data and second data, wherein the first data and the second data are data of different categories that is collected in a same scenario within a first time period; and obtain target data based on the first data and the second data, wherein the target data is a fusion result of first predicted data and second predicted data, the first predicted data is obtained by predicting, based on the first data, data for a target moment after the first time period, and the second predicted data is data that is determined based on the second data and that is related to a prediction bias of the first predicted data.

37. A computer storage medium, wherein the computer storage medium stores one or more instructions, and when the instructions are executed by one or more computers, the one or more computers are enabled to perform the operations of the method according to any one of claims 1 to 30.

38. A computer program product, comprising computer-readable instructions, wherein when the computer-readable instructions are run on a computer device, the computer device is enabled to perform the method according to any one of claims 1 to 30.

39. A system, comprising at least one processor and at least one memory, wherein the processor and the memory are connected to and communicate with each other through a communication bus, wherein
the at least one memory is configured to store code; and
the at least one processor is configured to execute the code to perform the method according to any one of claims 1 to 30.

40. A chip, comprising at least one processing unit and an interface circuit, wherein the interface circuit is configured to provide program instructions or data for the at least one processing unit, and the at least one processing unit is configured to execute the program instructions to implement the method according to any one of claims 1 to 30.
